Europäisches Patentamt

European Patent Office

Office européen des brevets

(11) Publication number: **0 067 648**

**B1**

(12) **EUROPEAN PATENT SPECIFICATION**

(45) Date of publication of patent specification: **18.12.85**

(21) Application number: **82302949.1**

(22) Date of filing: **08.06.82**

(51) Int. Cl.⁴: **B 60 N 1/10**

(54) Seat leg structure for a delivery van.

(30) Priority: **13.06.81 JP 87125/81 U**
**24.03.82 JP 47835/82**

(43) Date of publication of application:
**22.12.82 Bulletin 82/51**

(45) Publication of the grant of the patent:
**18.12.85 Bulletin 85/51**

(84) Designated Contracting States:
**DE FR GB IT**

(56) References cited:
**GB-A- 767 643**
**GB-A-2 009 592**
**US-A-4 194 782**

(73) Proprietor: **TOYOTA SHATAI KABUSHIKI KAISHA**
**100 Kanayama Ichiriyama-cho**
**Kariya-shi Aichi-ken (JP)**

(72) Inventor: **Tatematsu, Akinobu**
**68, Tsuchitori Imagawa-cho**
**Kariya-shi Aichi-ken (JP)**
Inventor: **Iizaka, Yoshiaki**
**44-5, Okino Noda-cho**
**Kariya-shi Aichi-ken (JP)**

(74) Representative: **Senior, Alan Murray et al**
**J.A. KEMP & CO 14 South Square Gray's Inn**
**London WC1R 5EU (GB)**

EP 0 067 648 B1

Courier Press, Leamington Spa, England.

## Description

This invention relates to a seat leg structure for a delivery van which has a driver's cab and a rear compartment, and more specifically it relates to a leg structure for a first and a second seats provided in the rear compartment of the delivery van.

In a known delivery van which has behind the front seat in a driver's cab a covered rear compartment for passengers and cargo where a first rear seat is arranged on the floor in the forward portion and a second rear seat is arranged at the back of the first seat, the second rear seat provided near the rear door has been laid away to supply floor space for loading goods through the rear door, but the first seat has been left unfolded. It has been desired to fold the first seat, too, when there is no passengers but a lot of load.

In another known delivery van, both of the first and the second seats can be folded to supply floor space for loading in the rear compartment through the side door or the rear door, but disadvantageously the folded seats have occupied so much space that there has not been supplied broad floor space for load after the seats are folded.

It is the principal object of the present invention to provide an improved seat leg structure for a delivery van which overcomes the disadvantages of the prior art as well as meets the above requirement, that is, a seat leg structure which allows for broad floor space for load after the first and the second seats are folded in the rear compartment. Further, preferred aims are to permit easy folding of the first and the second seats as well as easy putting back of them into their original position and reduction of room occupied by the folded seats on the floor, together with folding of either of the first or the second seat, or both of them, selectively.

US—A—4 194 782 discloses a seat leg structure for a delivery van adapted for supporting a first seat and a second seat which are arranged on the floor in front and the rear at such predetermined intervals that passengers can sit thereon, each of said first and second seats having a back cushion and a corresponding seat cushion comprising a pair of leg assemblies for supporting each of said seat cushions, each of said leg assemblies having a pair of front legs and a pair of rear legs, a pair of connecting legs provided for connecting said rear legs of said first seat at the lowermost ends thereof to the lowermost ends of said front legs of said second seat, either the front legs of said first seat or said rear legs of said second seat being pivotally mounted on the floor by a floor pivot, the others of said legs not mounted on the floor, being foldable towards the lower surface of the corresponding seat cushion; and pivotal means through which the other legs of the seat having the legs to be folded are connected to said connecting legs so as to fold the seat towards the other seat.

According to the present invention, there is provided a seat leg structure for a delivery van adapted for supporting a first seat and a second seat which are arranged on the floor in front and the rear at such predetermined intervals that passengers can sit thereon, each of said first and second seats having a back cushion and a corresponding seat cushion comprising a pair of leg assemblies for supporting each of said seat cushions, each of said leg assemblies having a pair of front legs and a pair of rear legs, a pair of connecting legs provided for connecting said rear legs of said first seat at the lowermost ends thereof to the lowermost ends of said front legs of said second seat, either the front legs of said first seat or said rear legs of said second seat being pivotally mounted on the floor by a floor pivot, the others of said legs not mounted on the floor, being foldable towards the lower surface of the corresponding seat cushion; and pivotal means through which the other legs of the seat having the legs to be folded are connected to said connecting legs so as to fold the seat towards the other seat, characterised in that the back cushions of each of the first and second seats are arranged to be folded over and laid on the corresponding seat cushions and in that the whole structure is pivotable about the floor pivot whereby, on folding of the back cushions and pivoting of the structure about the floor pivot and at said pivotal means the structure can take the position that the cushions of one seat are substantially vertical and the cushions of the other seat are substantially horizontal and above those of the one seat, and the connecting legs are substantially vertical.

In other embodiments in US—A—4 194 782 there are pairs of floor hinges through which said front legs of the first seat and said rear legs of the second seat are respectively pivotally and releasably mounted on the floor; and pivotal means through which the other legs of the seats are connected to the connecting legs so as to fold one seat towards the other.

The present invention also provides a seat leg structure for a delivery van adapted for supporting a first seat and a second seat which are arranged on the floor in front and the rear at such predetermined intervals that passenger can sit thereon, each of said first and second seats having a back cushion and a corresponding seat cushion, comprising a pair of leg assemblies for supporting each of said seat cushions, each of said leg assemblies having a pair of front legs and a pair of rear legs; a pair of connecting legs provided for connecting said rear legs of said first seat at the lowermost ends thereof to the lowermost ends of said front legs of said second seat;

pairs of floor hinges through which said front legs of the first seat and said rear legs of the second seat are respectively pivotally and releasably mounted on the floor; and pivotal means through which the other legs of the seats are connected to the connecting legs so as to fold one seat towards the other, characterised in that the back cushions of each of the first and second seats are arranged to be folded over and laid on the corresponding seat cushions and in that the whole structure is pivotable about either pair of floor hinges upon release of the other whereby, on folding of the back cushions, release of one pair of floor hinges, and pivoting of the structure both about the other pair of floor hinges and at the one of said pivotal means nearer that pair of floor hinges which is released, the structure can take the position that the cushions of one seat are substantially vertical and the cushions of the other seat are substantially horizontal and above those of the one seat, and the connecting legs are substantially vertical.

US—A—4 194 782 also discloses a seat leg structure for a delivery van adapted for supporting a first seat and a second seat which are arranged on the floor in front and the rear at such predetermined intervals that passengers can sit thereon, each of said first and second seats having a back cushion and a corresponding seat cushion, comprising a pivotal leg provided at one end of each of the seat cushions and pivotable to be laid on the lower surface of the seat cushion, a pair of fixed legs which are provided at the other end of each of the seats, the fixed legs being arranged to allow pivoting of the seats relative to the floor and a pair of arms extending between the first and the second seats.

The present invention further provides a seat leg structure for a delivery van adapted for supporting a first seat and a second seat which are arranged on the floor in front and the rear at such predetermined intervals that passengers can sit thereon, each of said first and second seats having a back cushion and a corresponding seat cushion, comprising a pivotal leg provided at one end of each of the seat cushions and pivotable to be laid on the lower surface of the seat cushion, a pair of fixed legs which are provided at the other end of each of the seats, the fixed legs being arranged to allow pivoting of the seats relative to the floor and a pair of arms extending between the first and the second seats characterised in that the back cushions of each of the first and second seats are arranged to be folded over and laid on the corresponding seat cushions, in that the arms are lift arms pivotally connected at first ends thereof to the lowermost ends of the fixed legs of said one seat, or to the floor adjacent thereto, and being connected to the fixed legs of the other seat whereby on folding of the back cushions, pivoting of the said one seat, pivoting of the other seat and pivoting of the lift arms the structure can take the position that the cushions of one seat are substantially vertical, and the cushions of the other seat are substantially horizontal and above those of the one seat, with the lift arms substantially vertical.

Preferred embodiments of the invention are described in detail hereinafter, with reference to the appended drawings, in which:

Figure 1 is a side elevational view of a delivery van showing the arrangement and the structure of a first seat and a second seat, to which a first embodiment of the present invention is applied;

Figure 2 is a top plan view of the delivery van of Figure 1 with the roof removed, which shows the arrangement of the first seat and the second seat and the location of doors in the rear compartment;

Figure 3 is a perspective view of a seat leg structure of the first and the second seats;

Figure 4A is a front view of a pivotal portion adapted for connection between the lower front leg and the upper front leg of the second seat;

Figure 4B is a perspective view of the pivotal portion of Figure 4A;

Figure 5 includes illustrative views of a pivotal portion adapted for connection between the rearmost end of the support member and the upper rear leg of the second seat;

Figure 6 is an exploded view of releasable means for the coupling leg of the rear leg of the first seat, in which the releasable means is released;

Figure 7 is a sectional view of the releasable means of Figure 6 through which the coupling leg of the rear leg of the first seat is attached on the floor;

Figure 8 is a sectional view taken along line VIII—VIII in Figure 7;

Figure 9 is an illustrative view in which the second seat is folded forwardly;

Figure 10 is an illustrative view in which the second seat is folded and the back cushion of the first seat is laid on the seat cushion;

Figure 11 is an illustrative view in which the first and the second seats are folded and laid away in the forward portion of the rear compartment;

Figure 12 is a side elevational view of a delivery van showing the arrangement and the structure of a first seat and a second seat, to which a second embodiment of the present invention is applied;

Figure 13 is a perspective view of a seat leg structure of the first and the second seats in Figure 12;

Figure 14 is an illustrative view in which the first seat is being folded;

Figure 15 is an illustrative view in which the first seat is folded;

Figure 16 is an illustrative view in which the first and the second seats are folded and laid away in the rear portion of the rear compartment;

Figure 17 is a perspective view of a seat leg structure of a first seat and a second seat of a third embodiment of the present invention;

Figure 18 is an enlarged perspective view of a hinge bracket for the lower member of the front leg of the first seat;

Figure 19 is a sectional view of the hinge bracket of Figure 18 in which the hinge bracket is engaged to attach the lower member of the front leg to the floor;

Figure 20 is an illustrative view in which the first and the second seats are folded and laid away in the forward portion of the rear compartment;

Figure 21 is an illustrative view in which the first and the second seats are folded and laid away in the rear portion of the rear compartment;

Figure 22 is a side elevational view of a delivery van showing the arrangement and the structure of a first seat and a second seat, to which a fourth embodiment of the present invention is adapted;

Figure 23 is an illustrative view of a seat leg structure of the first and the second seats;

Figure 24 is an illustrative view in which the first seat is being folded forwardly;

Figure 25 is an illustrative view in which the first seat is folded and the second seat is being folded;

Figure 26 is an illustrative view in which the folded second seat is being moved away forwardly;

Figure 27 is an illustrative view in which the first and the second seats are folded and laid away in the forward portion of the rear compartment;

Figure 28 is a longitudinal sectional view of a rear compartment of a delivery van showing the structure of a first seat and a second seat, to which a fifth embodiment of the present invention is adapted;

Figure 29 is an illustrative view of a seat leg structure of the first and the second seats;

Figure 30 is an illustrative view in which the second seat is being folded backwardly;

Figure 31 is an illustrative view in which the second seat is folded and the first seat is being folded;

Figure 32 is an illustrative view in which the folded first seat is being moved away backwardly;

Figure 33 is an illustrative view in which the first and the second seats are folded and laid away in the rear portion of the rear compartment; and

Figure 34 is an illustrative view in which the first seat has a back cushion at the front end thereof.

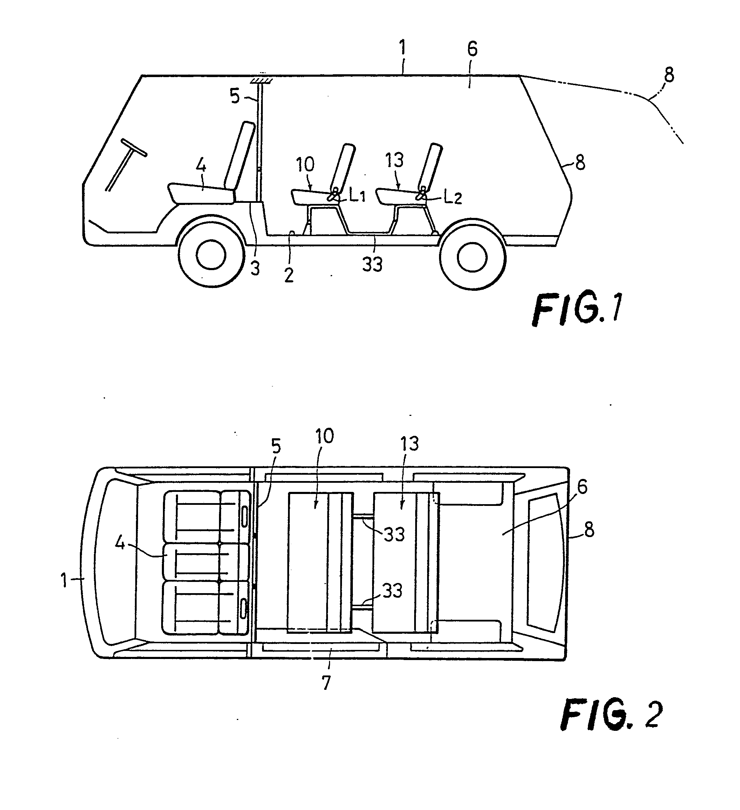

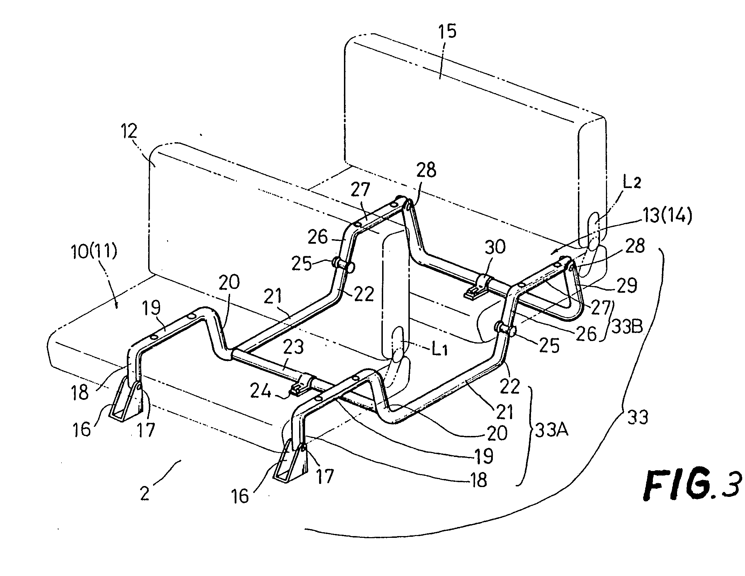

Referring now to Figures 1 to 11 of the drawings in which the first embodiment of the present invention is shown, a delivery van 1 has an engine in the forward portion thereof and consequently it has a stepped floor 2, the forward portion of which is higher than the rear portion thereof to form a raised portion 3. A front seat 4 is mounted at the raised portion 3. A separator 5 which is assembled by a longitudinal and a transverse bars stands on the raised portion 3 at the back of the front seat 4 to separate a driver's cab including the front seat 4 from a rear compartment 6. A side door 7 is provided on the left-hand wall in the forward portion of the rear compartment 6. The side door 7 is slidable backwardly to open and permit access to the rear compartment 6. A rear door 8 is provided to serve as the rear wall of the rear compartment 6. The rear door 8 is provided with hinge means at the upper end thereof and rotatable around the hinge means to open upwardly. There are provided a first seat 10 and a second seat 13 on the floor 2 of the rear compartment 6 at such intervals that passengers can sit thereon facing front. The first seat 10 and the second seat 13 are fixed on a leg assembly 33, and have a first seat cushion 11 and a second seat cushion 14, and a first back cushion 12 and a second back cushion 15 connected to the first seat cushion 11 and the second seat cushion 14 through reclining devices L1 and L2, respectively. The back cushions 12 and 15 stand substantially straight in their regular seat position (when passengers can sit on the seats) and, when necessary, can be reclined forwardly until the back cushions 12 and 15 are laid on the upper surfaces of the seat cushions 11 and 14. The leg assembly 33 which supports the first seat cushion 11 and the second seat cushion 14 is composed of a pair of leg brackets 16, a pair of first arms 33A fixed to the first seat cushion 11, a pair of second arms 33B fixed to the second seat cushion 14 and a pivotal leg 29 which serves as a rear leg of the second cushion 14.

The leg brackets 16 serve as the lower portions of the front legs of the first seat cushion 11 and have lowermost ends fixed at predetermined intervals therebetween on the forward portion of the floor 2 of the rear compartment 6. The two first arms 33A are rotatably mounted at the lowermost ends thereof to the uppermost ends of the leg brackets 16. Each of the first arms 33A includes a vertically extending upper front leg 18, and is bent backwardly to form a horizontally extending support member 19 to which the first seat cushion 11 is fixed, and then bent downwardly at the rearmost end of the support member 19 to form a vertically extending rear leg 20, and bent backwardly at the lowermost end of the rear leg 20 to form a connecting leg 21 of predetermined length extending along the floor 2, and bent upwardly at the rearmost end of the connecting leg 21 to form a lower front leg 22 extending vertically for supporting the second seat cushion 14. The two first arms 33A are arranged in parallel at the same intervals as the leg brackets 16. A coupling leg 23 extends between the lowermost ends of the two rear legs 20 to be fixed thereto. Each of the upper front legs 18 are pivotally connected at the lowermost end thereof to the uppermost end of the leg bracket 16 by a pivot 17. Thus constructed, the first arms 33A are forwardly pivotable around the pivots 17.

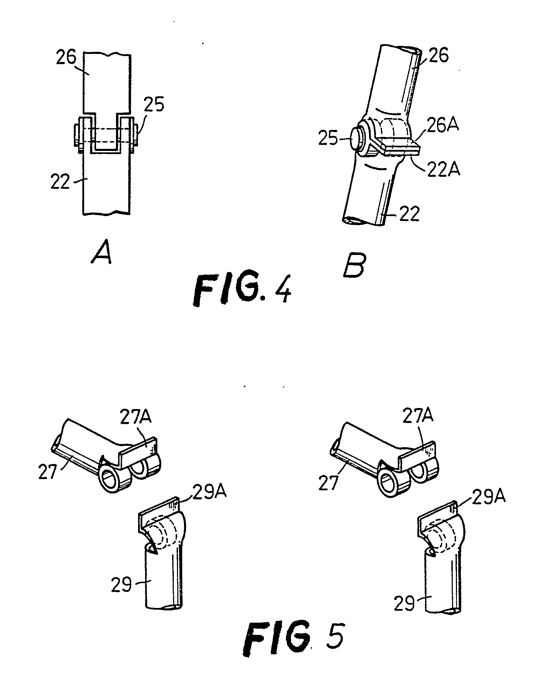

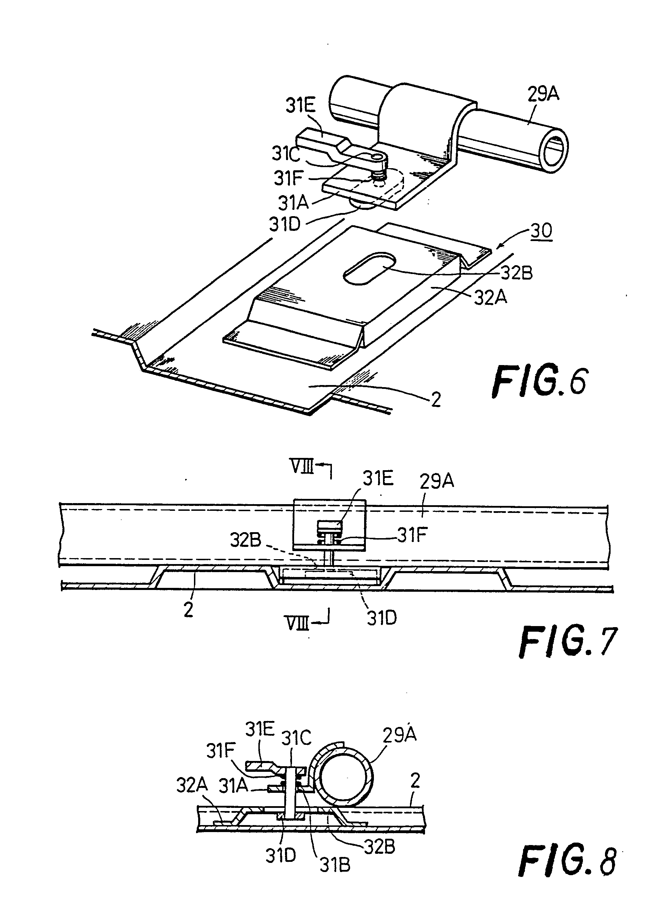

Each of the second arms 33B includes a vertically extending upper front leg 26, and is bent backwardly to form a horizontally extending support member 27 to which the second seat cushion 14 is fixed. The upper front leg 26 is pivotally connected at the lowermost end thereof to the rearmost end of the first arm 33A, that is, the uppermost end of the lower front leg 22 of the second seat cushion 14 by a pivot 25. Thus constructed, the two second arms 33B are forwardly pivotable. The pivotal leg 29 is a U-shaped member and pivotally connected at both upper ends thereof to the rearmost ends of the two second arms 33B by pivots 28. In order to assure security of the leg assembly in the regular seat position, each of the pivots 25 is provided with a stopper piece 22A attached to the uppermost end of the lower front leg 22 and a stopper piece 26A attached to the lowermost end of the upper front leg 26, as is shown in Figures 4A and 4B. In the same way each of the pivots 28 is provided with a stopper piece 27A attached to the rearmost end of the support member 27 and a stopper piece 29A attached to the uppermost end of the pivotal leg 29, as is shown in Figure 5.

There are provided releasable means 24 and 30 at the central portions of the coupling leg 23 and of the lower member 29B of the pivotal leg 29, respectively. The releasable means 24 and 30 are adapted to fix the coupling leg 23 and the pivotal leg 29 on the floor 2 in the regular seat position and released when the seats are folded. The two releasable means 24 and 30 are of the same structure, and, for example, the releasable means 30 is illustrated in Figures 6 to 8. An upset tray-shaped securing piece 32A with an O-shaped engaging slot 32B is fixed onto the predetermined portion of the floor 2, and in this embodiment, in a concave portion of the uneven surface of the floor 2. A plate securing piece 31A is fixed onto the lower member 29B of the pivotal leg 29. A handle 31E is provided above the securing piece 31A. The securing piece 31A has an aperture 31B through which a supporting shaft 31C extends. The handle 31E is fixed to the uppermost end of the supporting shaft 31C above the securing piece 31A. A retaining portion 31D is fixed to the lowermost end of the supporting shaft 31C below the securing piece 31A so as to be inserted into the tray-shaped securing piece 32A. A coil spring 31F is interposed around the supporting shaft 31C between the handle 31E and the securing piece 31A so as to press the handle 31E upwardly at all times. Then the retaining portion 31E is pulled toward the lower surface of the securing piece 31A, as is shown in Figure 6. In engaging the releasable means 30, the retaining portion 31D provided below the securing piece 31A is positioned above the securing piece 32A and then the handle 31E is pressed downwardly until the retaining portion 31D and the supporting shaft 31C extending below the securing piece 31A are inserted through the engaging slot 32B into the securing piece 32A. After the handle 31E is rotated to rotate the retaining portion 31D within the securing piece 32A, the handle 31E is released. Now, the retaining portion 31D can be fixed under biasing force of the coil spring 31C, as is shown in Figures 7 and 8. The releasable means 30 is released following to the above mentioned steps in reverse.

The first seat cushion 11 is screwed to the support members 19 of the two first arms 33A, and the second seat cushion 14 is screwed to the support members 27 of the two second arms 33B.

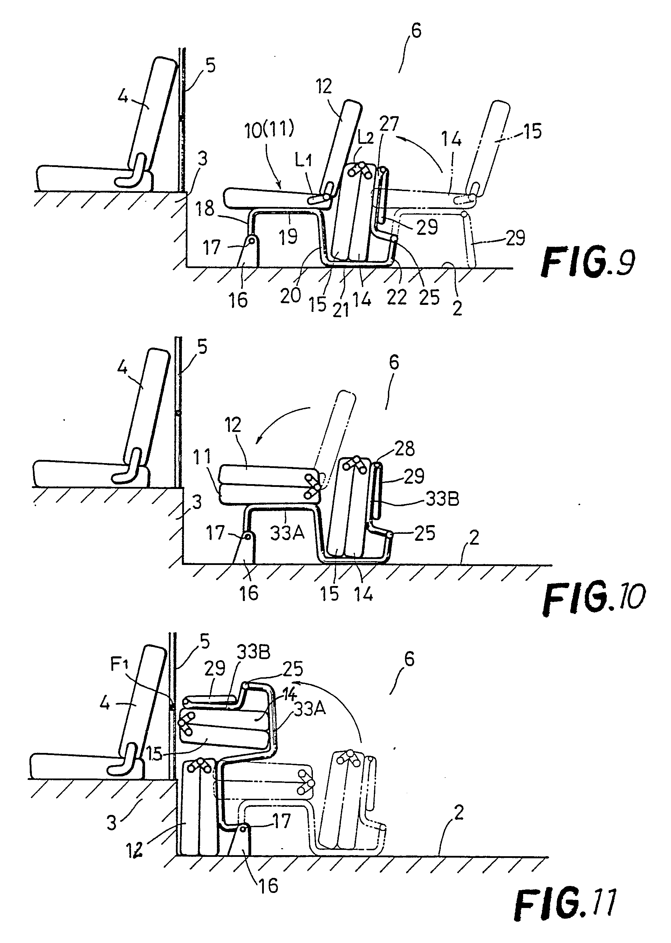

In folding the first seat 10 and the second seat 13 from their regular seat position, the second back cushion 15 is reclined forward until it is laid on the second seat cushion 14 and the releasable means 30 provided at the lower member 29B of the pivotal leg 29 is released to pivot the pivotal leg until it is laid on the lower surface of the second seat cushion 14. The second seat cushion 14 with the second back cushion 15 and the pivotal leg 29 thereon pivots forwardly around the pivots 25 of the front legs until it stands vertically on the connecting legs 21, as is shown in Figure 9. Now, the second seat 13 is completely removed to supply space for loading goods through the rear door 8.

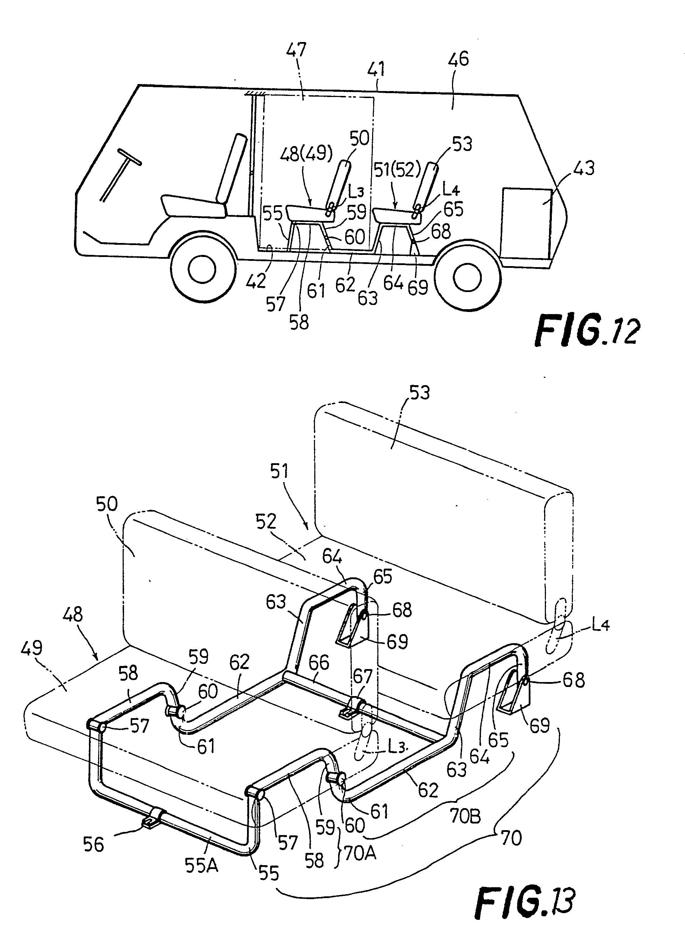

In folding the first seat 10, the first back cushion 12 is reclined forwardly until it is laid on the first seat cushion 11, as is shown in Figure 10, and the releasable means 24 of the coupling leg 23 is released. Then the two lower front legs 22 of the second seat 13, that is, the rearmost ends of the first arms 33A are raised to pivot the first arms 33A forwardly around the pivots 17 provided at the leg brackets 16, until the two first arms 33A stand straight behind the separator 5. A hook F1 attached to the rearmost end of the second seat cushion 14 is engaged with a portion of the supporting bar of the separator 5 so as to lock the erected first arms 33A, as is shown in Figure 11. As the first arms 33A stand straight, the first back cushion 12 and the first seat cushion 11 are kept vertically in layers with the folded second seat 13 thereon. Now, the floor space for load is widened after the first seat 10 and the second seat 13 are laid away in piles in the front portion of the rear compartment 6.

According to this embodiment, the first seat 10 and the second seat 13 are laid away in the front portion of the rear compartment 6, which will be convenient to a delivery van having at the back thereof a rear door through which goods are loaded. The folded first seat 10 and the second seat 13 can be put back to their regular seat position following the above mentioned folding steps in reverse.

In this embodiment the front legs of the first seat cushion 11 and the second seat cushion 14 are composed of upper and lower parts, and the pivots 17 and 25 are provided at the central portions of the rear legs. The seat cushions 11 and 14 are fixed on the support members 19 and 27, a little projecting forwardly from the front ends of the support members. Thus constructed, both of the seats can be laid away in piles by pivotal movement of the two first arms 33A, advantageously leaving only small spaces between the first seat cushion 11 and the raised portion 3 and also only small space between the first seat cushion 11 and the second seat cushion 14.

As to the vertical positioning of the pivots 17 and 25 and the intervals between the front end of the first seat cushion 11 and the front ends of the support members 19 as well as those between the front end of the second seat cushion 14 and the front ends of the support member 27, an appropriate positioning and appropriate intervals should be selected depending upon the mutual relationships among the intervals between the two seats, the size of the seats, relative positioning of the separator 5, the raised portion 3 and the seats, and the space necessary for laying away the seats in piles.

Referring to Figures 12 to 16 of the drawing in which the second embodiment of the present invention is shown, a rear engined delivery van 41 has a raised portion 43 in the rear portion thereof. A side door 47 is provided on the side panel of the delivery van 41 for permitting access to the rear compartment 46, and the rear panel of the delivery van 41 cannot be opened.

There are provided a first seat 48 and a second seat 51 on the floor 42 of the rear compartment 46 at such intervals that passengers can sit thereon. The first seat 48 and the second seat 51 have a first seat cushion 49 and a second seat cushion 52, and a first back cushion 50 and a second back cushion 53 which are connected to the rearmost ends of the first seat cushion 49 and the second seat cushion 52 through reclining devices L3 and L4, respectively. The back cushions 50 and 53 stand substantially straight in their regular seat position, and, when necessary, are reclined forwardly until the back cushions 50 and 53 are laid on the upper surfaces of the seat cushion 49 and 52.

The first seat cushion 49 and the second seat cushion 52 are horizontally fixed onto a leg assembly 70. The leg assembly 70 is composed of a pivotal leg 55, a pair of first arms 70A, a pair of second arms 70B, and a pair of leg brackets 69, which are all arranged in fore-and-aft reverse of the leg assembly 33 shown in the first embodiment. The pivotal leg 55 is U-shaped member and provided with a pair of pivots 57 at the upper ends thereof.

Each of the first arms 70A includes a horizontally extending support member 58 to which the first seat cushion 49 is fixed and is bent downwardly to form an upper rear leg 59. The support member 58 is pivotally connected at the front end thereof to the upper end of the pivotal leg 55 by the pivot 57. Each of the uppermost end of the pivotal leg 55 and the front end .of the support member 58 which are connected to each other by the pivot 57 is provided with a stopper piece so that the pivotal leg 55 can pivot from its erected position only to the lower surface of the first seat cushion 49 in the same way as is shown in Figure 5. Each of the second arms 70B includes a lower rear leg 61 which is pivotally connected to the lower end of the upper rear leg 59 by a pivot 60 and extending downwardly, and is bent backwardly to form a connecting leg 62 of predetermined length extending along the floor 42, and then bent upwardly at the rearmost end of the connecting leg 62 to form a vertically extending front leg 63, and bent backwardly at the uppermost end of the front leg 63 to form a horizontally extending support member 64 which is adapted to carry the second seat cushion 52 firmly, and bent downwardly at the rearmost end of the support member 64 to form an upper rear 65. A coupling leg 66 extends between the lowermost ends of the front legs .63 of the two second arms 70B to keep the second arms 70B at the predetermined intervals. The leg brackets 69 are pivotally connected at the uppermost ends thereof to the rearmost ends of the second arms 70B, that is, the lowermost ends of the upper rear legs 65 by pivots 68, and the lowermost ends of the leg brackets 69 are fixed onto the floor 42. There are provided releasable means 67 and 56 at the central portions of the coupling leg 66 and the lower member 55A of the pivotal leg 55, respectively. The releasable means 67 and 56 are adapted to fix the coupling leg 66 and the pivotal leg 55 on the floor 42 in the regular seat position and released when the seats are folded. The releasable means 67 and 56 are of the same structure as is described referring to the first embodiment.

The first seat cushion 49 is screwed to the two support members 58, and the second seat cushion 52 is screwed to the two support members 64.

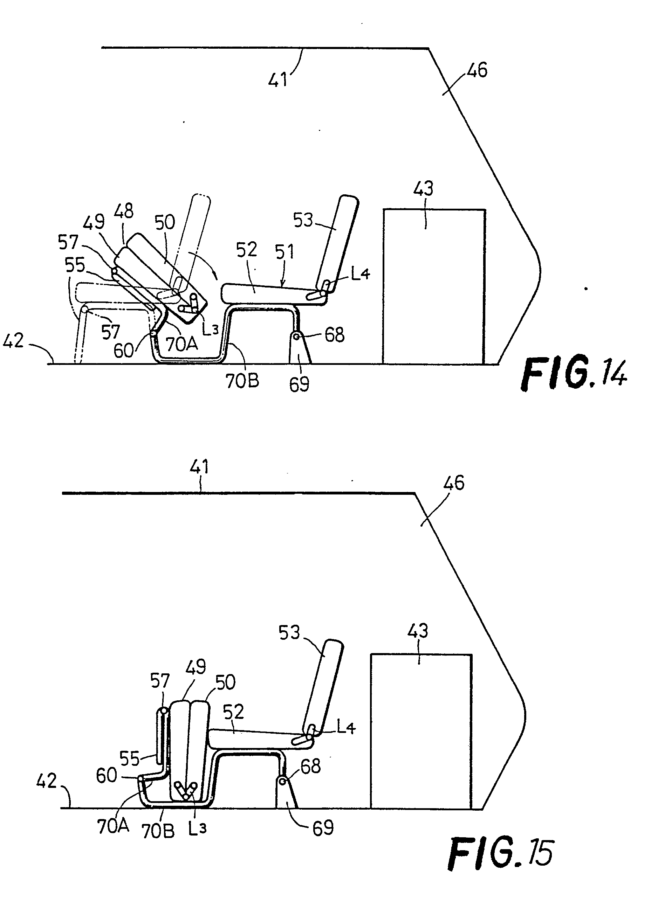

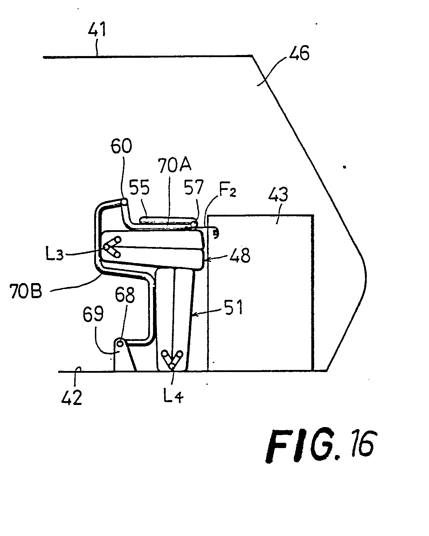

In folding the first and the second seats 48 and 51, the first back cushion 50 is reclined forwardly until it is laid on the first seat cushion 49. The releasable means 56 for the pivotal leg 55 is released to pivot the pivotal leg 55 to be folded on the lower surface of the first seat cushion 49. Then, the first seat cushion 49 with the first back cushion 50 and the pivotal leg 55 thereon is raised to pivot backwardly around the pivots 60 (as is shown in Figure 14) until it stands straight on the connecting legs 62 in front of the second seat 51, as is shown in Figure 15. Now the first seat 48 is completely removed to supply space for goods to be loaded through the side door 47.

In folding the second seat 51, the second back cushion 53 is reclined until it is laid on the second seat cushion. The releasable means 67 for the connecting leg 66 is released. Then, the two lower rear legs 61 of the first seat 48, that is, the front end of the second arms 70B, are raised to pivot the second arms 70B backwardly around the pivots 68 of the leg brackets 69, until the two seconds arms 70B stand straight in front of the raised portion 43. The support member 58 of the first seat cushion 49 has at the front end thereof a hook F2 which is engaged with a portion of the raised portion 43 to keep the two second arms 70B straight, as is shown in Figure 16.

When the two second arms 70B are raised straight, the second back cushion 53 and the second seat cushion 52 are kept straight in layers, carrying the folded first seat 48, at the rear portion of the rear compartment 46. Now the first and the second seats 48 and 51 are laid away to widen the floor space for loading goods through the side door 47 of the rear compartment 46.

The first and the second folded seats 48 and 51 can be put back to their regular seat position following the above mentioned folding steps in reverse.

In the second embodiment the rear legs of the first seat cushion 49 and the second seat cushion 52 are composed of upper and lower parts, and the pivots 60 and 68 are provided at the central portions of the rear legs. The seat cushions 49 and 52 are fixed onto the support member 58 and 64, a little projecting backwardly from the rearmost ends of the support members. Thus constructed, both of the seats can be laid away by pivotal movement of the two seconds arms 70B, advantageously leaving only small space between the second seat cushion 52 and the raised portion 43 and also only small space between the first seat cushion 49 and the second seat cushion 52.

As to the vertical positioning of the pivots 60 and 68 and the intervals between the front end of the first seat cushion 48 and the front ends of the support members 58 as well as those between the front end of the second seat cushion 51 and the front ends of the support members 64, an appropriate positioning and appropriate intervals should be selected depending upon the mutual relationships among the intervals between the two seats, the size of the seats, relative positioning of the raised portion 43 and the seats, and the space necessary for laying away the seats in piles.

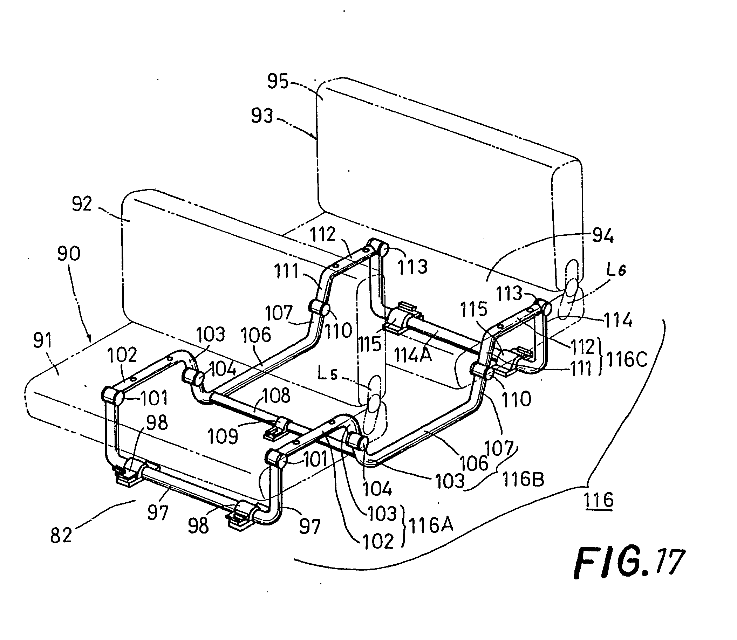

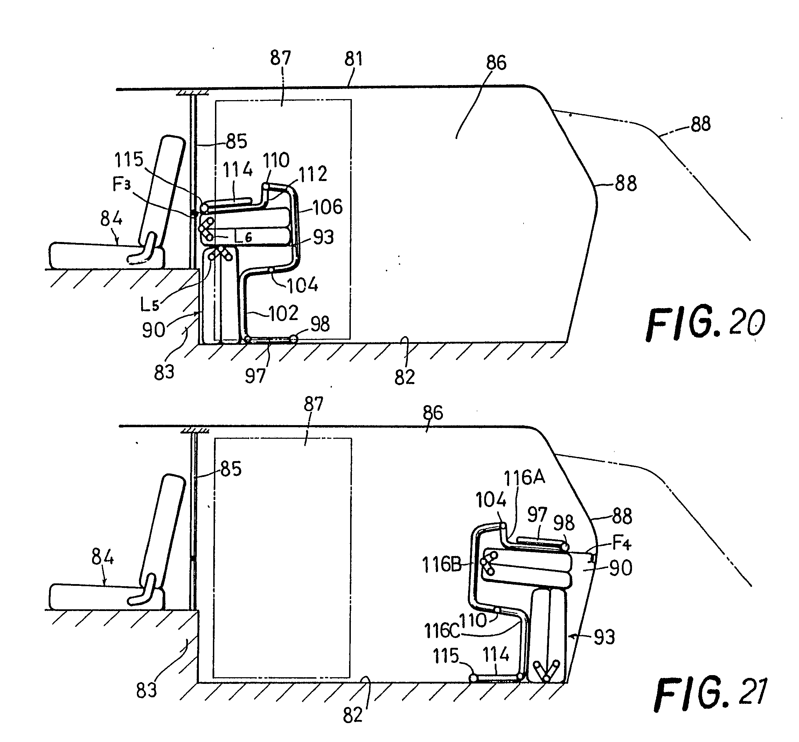

Referring to Figures 17 to 21 of the drawings in which the third embodiment of the present invention is shown, a delivery van 81 has the same structure as the one related in the first embodiment. The delivery van 81 has in the forward portion thereof a raised portion 83 which carries a front seat 84 and a separator 85. A rear compartment 86 has a side door 87 provided on the side panel in the forward portion thereof and a rear door 88 at the back thereof. A first seat 90 and a second seat 93 are provided on the floor 82 of the rear compartment 86 at such intervals that passengers can sit thereon. The first seat 90 and the second seat 93 have a first seat cushion 91 and a second seat cushion 94, and a first back cushion 92 and a second back cushion 95 which are connected to the first seat cushion 91 and the second seat cushion 94 through reclining devices L5 and L6, respectively. The back cushions 92 and 95 stand substantially straight in their regular seat position, and, when necessary, are reclined forwardly until the back cushions 92 and 95 are laid on the seat cushions 91 and 94.

The first seat cushion 91 and second seat cushion 94 are supported by a leg assembly 116 which is structured symmetrically in front and in the rear. The leg assembly 116 is composed of a front pivotal leg 97, a pair of first arms 116A to fix the first seat cushion 91 thereon, a pair of second arms 116B mainly composed of a pair of connecting legs 106, a pair of third arms 116C to fix the second seat cushion 94 thereon, and a rear pivotal leg 114. The front pivotal leg 97 is a U-shaped member and provided with pivots 101 at the uppermost ends thereof. The front pivotal leg 97 has a lower member 97A fixed on the floor 82 by a pair of detachable hinge brackets 98 which will be mentioned later. In laying away the leg assembly 116 in the forward portion of the rear compartment 86, the leg assembly 116 is pivoted around the lower member 97A which is fixed on the floor by the hinge brackets 98. In laying away the leg assembly 116 in the rear portion of the rear compartment 86, the hinge brackets 98 are detached.

Each of the first arms 116A includes a horizontally extending support members 102 having a front end pivotally connected to the front pivotal leg 97 by the pivot 101, and is bent downwardly at the rearmost end of the support members 102 to form an upper rear legs 103 of the first seat cushion 91. Each of the uppermost ends of the front pivotal leg 97 and the front ends of the support members 102 which are connected to each other by the pivots 101 is provided with a stopper piece so that the front pivotal leg 97 can be pivoted from its erected position only to the lower surface of the first seat cushion 91. Each of the second arms 116B is a U-shaped member and pivotally connected to the lowermost end of the upper rear leg 103 by a pivot 104 and extends downwardly to form a lower rear leg 105. The second arm 116 is, then, bent backwardly at the lowermost end of the lower rear leg 105 to form a connecting leg 106 of predetermined length extending along the floor 82. The second arm 116B is bent upwardly at the rearmost end of the connecting leg 106 to form a lower front leg 107. A coupling leg 108 extends between the lowermost ends of the lower rear legs 105 to keep firmly the two second arms 116B at the predetermined intervals. The coupling leg 108 is releasably fixed on the floor 82 by releasable means 109.

The releasable means 109 has the same structure as that described in the first embodiment. Each of the third arms 116C is pivotally connected to the uppermost end of the lower front leg 107 of the second arm 116B by a pivot 110 and extends upwardly to form an upper front leg 111, and then it is bent backwardly at the uppermost end of the upper front leg 111 to form a horizontally extending support member 112 which carries the second seat cushion 94. The rear pivotal leg 114 is a U-shaped member and pivotally connected at the uppermost ends thereof to the rearmost ends of the support members 112 by pivots 113. The rear pivotal leg 114 has a lower member 114A which is fixed to the floor 82 by a pair of detachable hinge brackets 115. A stopper piece is provided at each of the uppermost ends of the rear pivotal leg 114 and the rearmost ends of the support members 112 which are connected to each other by the pivots 113 so that the rear pivotal leg 114 can pivot from its erected position only to the lower surface of the second seat cushion 94. (Refer to the stopper piece in Figure 5.)

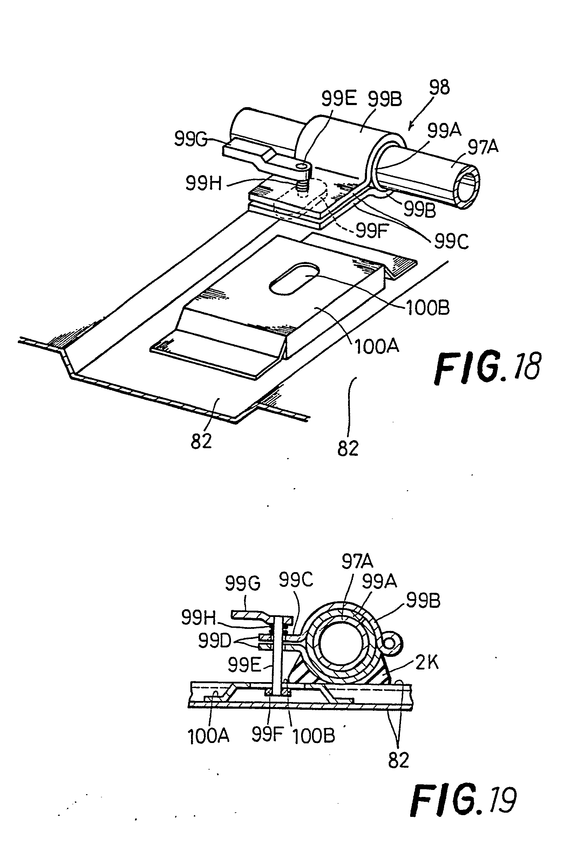

The hinge brackets 98 and 115 are of a structure, and the hinge bracket 98, for example, is illustrated in Figures 18 and 19. An upset tray-shaped securing piece 100A with an O-shaped engaging slot 100B is fixed onto the predetermined portion of the floor 82, and in this embodiment in a concave portion of the uneven surface of the floor 82. A bushing 99A is provided around the outside surface of the predetermined portion of the lower member 97A of the front pivotal leg 97. The bushing 99A is encircled by a pair of hinge plates 99B which are pivotally connected to each other at one end thereof. Each of the hinge plates 99B is provided with a mating piece 99C having an aperture 99D through which a supporting shaft 99E extends. A retaining portion 99F is fixed to the lowermost end of the supporting shaft 99E so as to be inserted into the tray-shaped securing piece 100A. A handle 99G is fixed to the uppermost end of the supporting shaft 99E. A coil spring 99H is interposed around the supporting shaft 99E between the handle 99H and the mating piece 99C so as to press the handle 99G upwardly at all times. Then the retaining portion 99F is pulled toward the lower surface of the mating piece 99C. In engaging the hinge bracket 98, the retaining portion 99F provided below the hinge plates 99B is positioned on the securing piece 100A, and then the handle 99G is pressed downwardly until the retaining portion 99F and the supporting shaft 99E extending below the hinge plates 99B are inserted through the engaging slot 100B into the securing piece 100A. After the handle 99G is rotated to rotate the retaining portion 99F within the securing piece 100A, the handle 99G is released. Now the lower member 97A is fixed to the securing piece 100A under the biasing force of the coil spring 99H, and the front pivotal leg 97 can pivot around the lower member 97A. (Refer to Figure 19.) A resilient member 2K is provided for resting the lower member 97A of the front pivotal leg 97 thereon. In disengaging the hinge bracket 98, the handle 99G is rotated to release the hinge bracket 98 from the securing piece 100A. The released hinge bracket 98 is carried by the lower member 97A to be rotated with it.

The first seat cushion 91 is screwed to the two support members 102, and the second seat cushion 94 is screwed to the two support members 112.

In folding the first seat 90 and the second seat 93 on the floor 82 in the forward portion of the rear compartment 86, the second back cushion 95 is reclined forwardly until it is laid on the second seat cushion 94, and after the second hinge brackets 115 for the rear pivotal leg 114 are released, the rear pivotal leg 114 is pivoted to be laid on the lower surface of the second seat cushion 94. Then, the second seat cushion 94 is raised to pivot forwardly around the pivots 110 until it stands straight in the connecting legs 106 behind the rearmost end of the first seat 90.

After the first back cushion 92 is laid on the first seat cushion 91, the releasable means 109 for the coupling leg 108 is released. The lower front legs 107 of the second arms 116B and the first arms 116A around the lower member 97A of the front pivotal leg 97 which is pivotally mounted on the floor 82 by the first hinge brackets 98 until the second arms 116B and the first arms 116A stand straight at a portion behind the raised portion. A hook F3 provided at the rearmost end of the second seat cushion 94 is engaged with a portion of the separator 85 to lock the second and the first erected arms 116B and 116A.

As the second arms 116B and the first arms 116A stand straight, the first back cushion 92 and first seat cushion 91 are kept straight in layers, carrying the folded second seat 93. Now the first seat 90 and the second seat 93 are laid away in piles in the forward portion of the rear compartment 86 to widen the floor space for loading goods through the rear door 88.

In folding the first seat 90 and the second seat 93 on the floor 82 in the rear portion of the rear compartment 86, the first back cushion 92 is reclined forwardly until it is laid on the first seat cushion 91, and after the first hinge brackets 98 for the front pivotal leg 97 are released, the front pivotal leg 97 is pivoted to be laid on the lower surface of the first seat cushion 91. Then, the front end of the first seat cushion 91 is raised to pivot backwardly around the pivots 104 until it stands straight on the connecting legs 106 in front of the second seat 93. After the second back cushion 95 is laid on the second seat cushion 94, the releasable means 109 for the coupling leg 108 is released, and the lower rear legs 105 of the second arms 106 are raised to pivot the second arms 116B and the third arms 116C backwardly around the lower member 114A of the rear pivotal leg 114 which is pivotally mounted on the floor 82 by the second hinge brackets 115 until the second arms 116B and the third arms 116C stand straight adjacent to the rear door 88. A hook F4 provided at the front end of the first seat cushion 91 is engaged with a portion of the inside surface of the rear door 88 to lock the erected second arms 116B and the third arms 116C.

As the second arms 116B and the third arms 116C stand straight, the first back cushion 95 and the first seat cushion 94 are kept straight in layers, carrying the folded first seat 90, in front of the rear door 88 of the rear compartment 86.

Now, the first seat 90 and the second seat 93 are completely laid away to widen the floor space for loading goods through the side door 87.

The seats laid away in piles can be put back to their regular seat position following the above mentioned folding steps in reverse.

The front legs, the rear legs, connecting legs and the like of the leg assembly are desirably made of a material which has enough strength and rigidity, such as a metallic material.

In the first, the second and the third embodiments, the leg assembly for the first seat and the second seat are composed of the front legs, support members for carrying the seat cushions and the rear legs. In case the seat cushion of the seat has a panel at the back thereof and a frame is provided around the panel, the front and the rear legs can be fixed directly to the frame and the support members can be omitted.

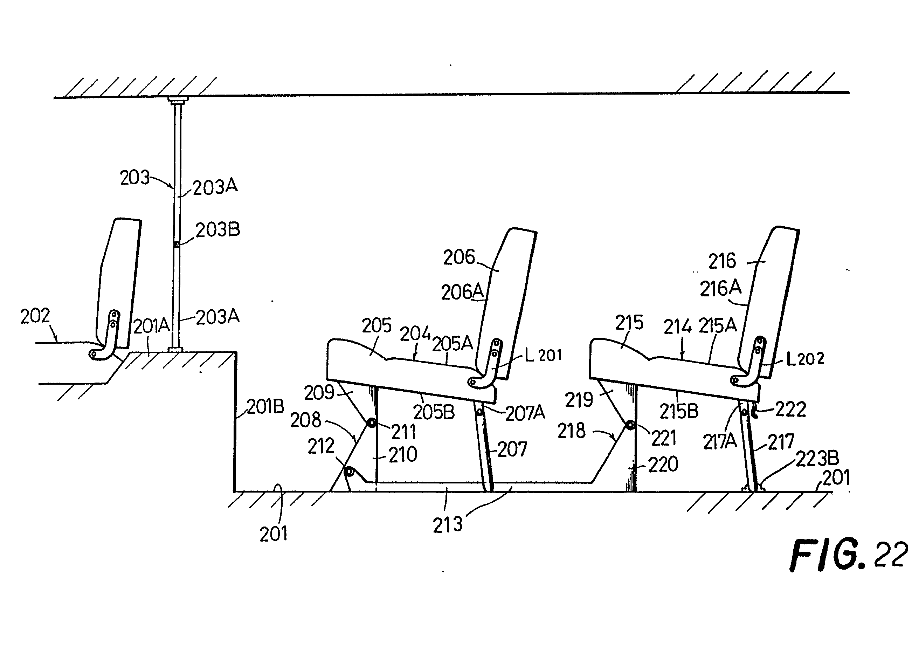

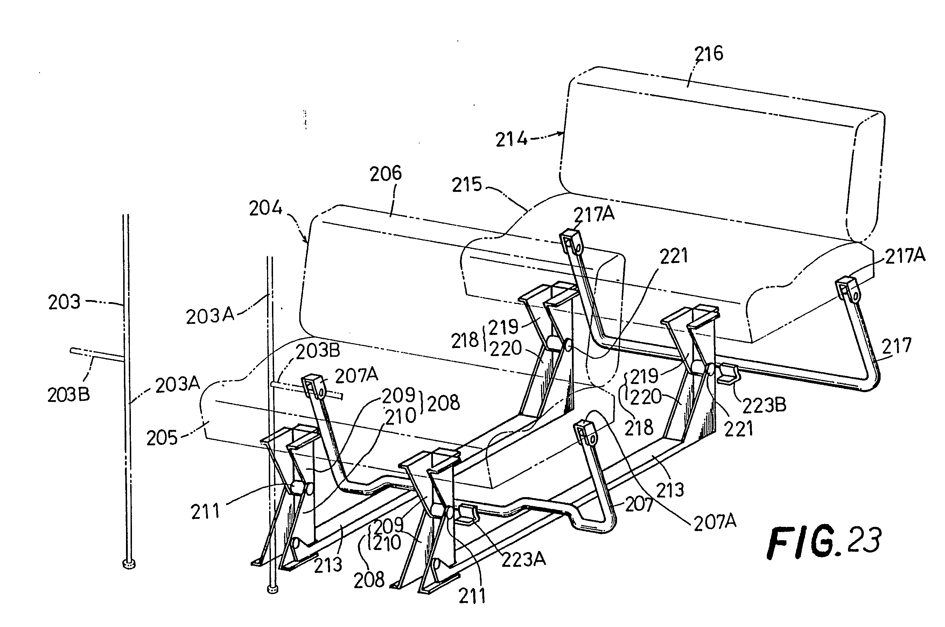

Referring to Figures 22 to 27 of the drawings in which the fourth embodiment of the present invention is shown, a delivery van has an engine in the forward portion thereof, and consequently it has a stepped floor 201, the forward portion of which is higher than the rear portion to form a raised portion 201A. A front seat 202 is mounted on the raised portion 201A. A separator 203 which is assembled by a vertical bar 203A and a transverse bar 203B stands on the raised portion 201A at the back of the front seat 202 to separate a driver's cab including the front seat 202 from a rear compartment. There are provided a first rear seat 204 and a second rear seat 214 on the floor 201 of the rear compartment at such intervals that passengers can sit thereon. The first seat 204 has a seat cushion 205 and a back cushion 206 connected to the rearmost end of the seat cushion 205 through a reclining device L201. The back cushion 206 stands substantially straight in the regular seat position, and, when necessary, can be reclined forwardly until the back cushion surface 206A is laid on the upper surface 205A of the seat cushion 205. The seat cushion 205 of the first rear seat 204 are substantially horizontally supported by a pivotal leg 207 and a pair of fixed legs 208.

The pivotal leg 207 is a U-shaped member, and connected at the rear ends thereof to brackets provided on the lower surface 205B of the seat cushion 205 in such way that it may pivot forwardly until it is laid on the lower surface 205B. Each of the fixed legs 208 is composed of an upper leg 209 fixed on the forward portion of the lower surface 205B of the seat cushion 205 and a lower leg 210 which are connected through a pivot 211 to the lowermost end of the upper leg 209. Each lower leg 210 is also fixed on the floor 201 at the lowermost end thereof. The upper leg 209 can pivot forwardly to be folded along with the seat cushion 205 around the pivot 211.

The second rear seat 214, being of the same structure as the first rear seat 204, has a seat cushion 215 and a back cushion 216 connected to the seat cushion 215 though a reclining device L202. The back cushion 216 stands substantially straight in the regular seat position, and, when necessary, can be reclined forwardly until the back cushion surface 216A is laid on the upper surface of the seat cushion 215. The second rear seat 214 is provided with a pivotal leg 217 and a pair of fixed legs 218. The pivotal leg 217 is a U-shaped member and connected at the upper ends thereof to brackets provided at the rear portion of the lower surface 215B of the seat cushion 215 in such a way that it may pivot forwardly until it is laid on the lower surface 215B. Each of the fixed legs 218 is composed of an upper leg 219 fixed on the forward portion of the lower surface 215B of the seat cushion 215 and a lower leg 220 connected to the lowermost end of the upper leg 219 through a pivot 221. Each lower leg 220 is also fixed at the lowermost end thereof to a lift arm 213 which will be mentioned later. Each upper leg 219 can pivot forwardly to be folded along with the seat cushion 215 around the pivot 221. There are provided a pair of lift arms 213 extending in parallel between the two lower legs 210 of the first rear seat 204 and the two fixed legs 220 of the second rear seat 214. Each lift arm 213 is connected at the front end thereof to the lowermost end of the lower leg 210 through a pivots 212 and can pivot upwardly to be raised around the pivot 212. The lift arm 213 is fixed at the rearmost end thereof to the lowermost end of the lower leg of the second rear seat 214. There is provided at the rear portion of the seat cushion 215 of the second rear seat 214 a hook 222 to be engaged with the bar 203B. When the first and the second rear seats 204 and 214 are in the regular seat position as is shown in Figure 22, the lower members of the pivotal legs 207 and 217 are catched by releasable means 223A and 223B provided on the floor 201.

In folding the seats, the pivotal legs 207 and 217 are released. There are provided means not shown for preventing pivotal movement of the two fixed legs 208 and the pivotal legs 207 and 217 around the two pivots 211 of the fixed legs 208 and 218 and the pivotal portions of the pivotal legs 207 and 217 in case the seats are in the regular seat position.

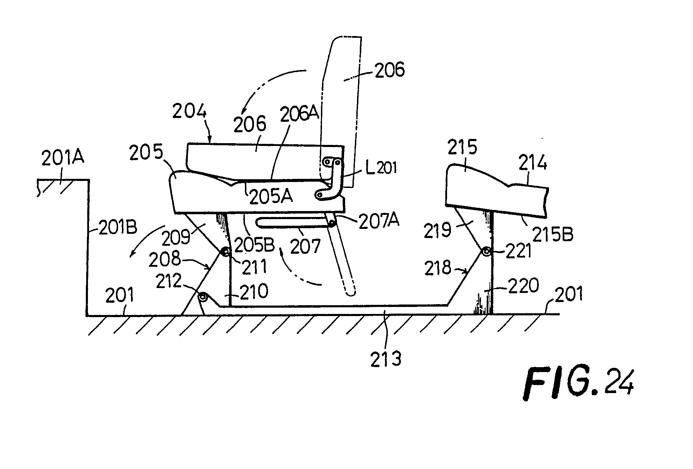

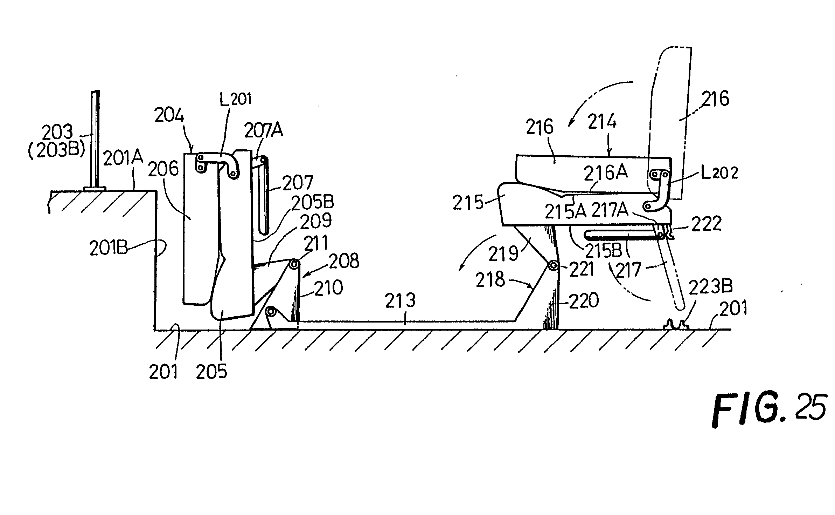

In folding the first rear seat 204 as is shown in Figure 24, the back cushion 206 is reclined forwardly until it is laid on the seat cushion 205, and the seat cushion 205 is raised at the rear portion thereof to pivot the pivotal leg 207 until it is laid on the lower surface 205B of the seat cushion 205. Then, the folded seat cushion 205 is pivoted forwardly around the pivots 211 of the fixed legs 208 until it is laid away vertically adjacent to the stepped portion 201B of the floor 201 as is shown in Figure 25. Now, room for loading is supplied after the seats are laid away. It should be noticed that, as the upper leg 209 of the fixed leg 208 is rotated in folding the first seat 204 vertically, the first seat 204 can be laid away in smaller room just behind the stepped portion 201B of the floor 201 than in case the fixed leg 208 is left in full length without being folded.

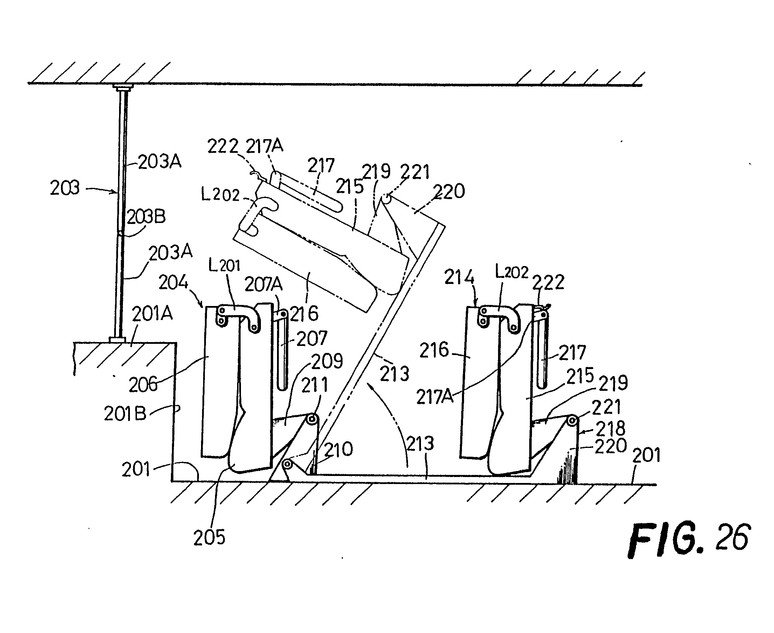

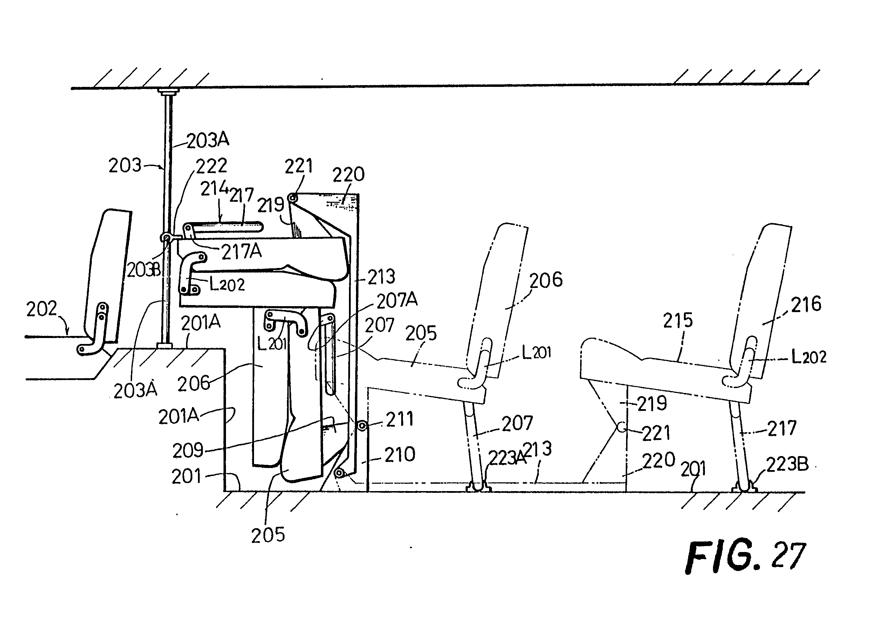

In folding the second rear seat 214, the seat back 216 is reclined forwardly until it is laid on the seat cushion 215 and the seat cushion 215 is raised at the rear portion thereof to pivot the pivotal leg 217 until it is laid on the lower surface 215B of the seat cushion 215, as is shown in Figure 25. Then, the seat cushion 215 is pivoted forwardly around the pivots 221 of the two fixed legs 218 until it stands vertically on the lift arms 213, as is shown by the solid line in Figure 26. Then, the lift arms 213 are pivoted upwardly around the pivots 212 until they stand vertically, as is shown by the phantom line in Figure 26. Now, the folded second rear seat 214 is laid on the folded first rear seat 204. A hook 222 provided at the back of the lower surface 215B of the seat cushion 215 of the second rear seat 214 is engaged with the transverse bar 203B of the separator 203 to fix the lift arms 213 and the folded second rear seat 214, as is shown in Figure 27. After the first rear seat 204 and the second rear seat 214 are laid away in the forward portion of the rear compartment, the folded first rear seat 204·carrying the folded second seat 214, there is supplied wide space for loading. In the fourth embodiment, the first and the second rear seats 204 and 214 are laid away in the forward portion of the rear compartment, which is convenient to a delivery van having at the back thereof a hinged door through which goods are loaded. The folded first seat 204 and the folded second seat 214 can be brought into their regular seat position following the folding steps in reverse.

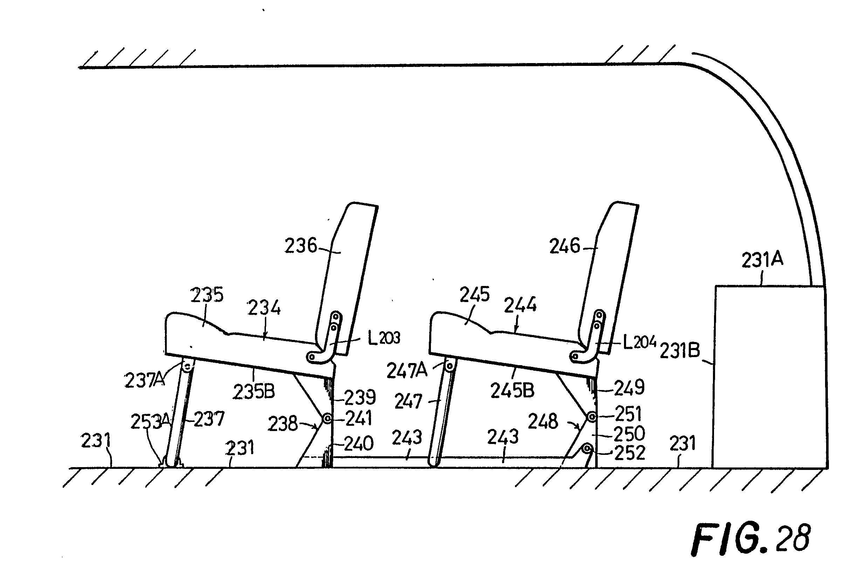

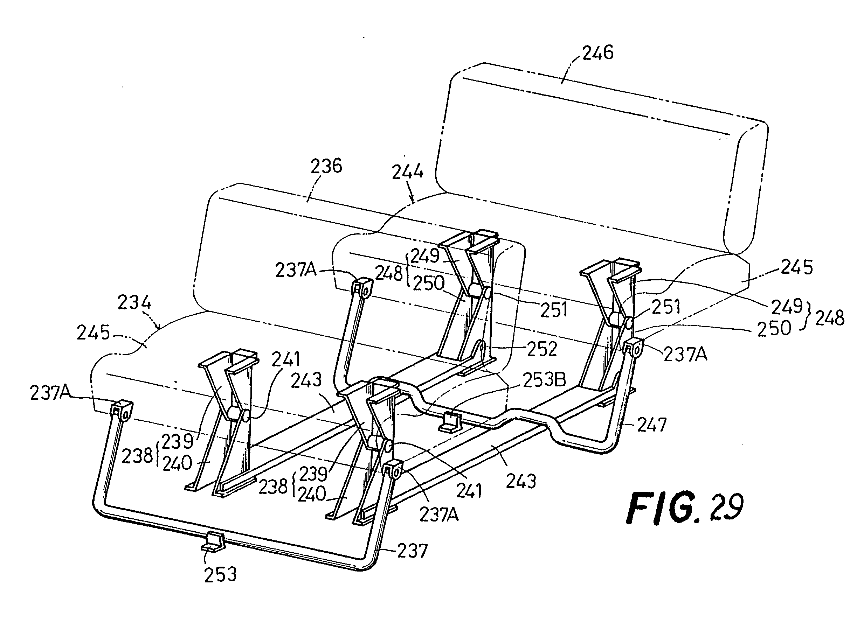

Referring to Figures 28 to 33 of the drawings in which the fifth embodiment of the present invention is shown, a rear engined delivery van has a raised portion 231A in the rear portion thereof. A door is provided on the side panel of the delivery van for permitting access to the rear compartment, and the rear panel of the delivery van cannot be opened. There are provided a first seat 234 and a second seat 244 on the floor 231 of the rear compartment at such intervals that passengers can sit thereon. The first and the second seats 234 and 244 have seat cushions 235 and 245 and back cushions 236 and 246 connected to the rear ends of the seat cushions 235 and 245 through reclining devices L203 and L204, respectively. The back cushions 236 and 246 stand substantially straight in the regular seat position, and, when necessary, can be reclined forwardly until they are laid on the upper surfaces 235A and 245A of the seat cushions 235 and 245. The first and the second seats 234 and 244 are substantially horizontally supported by pivotal legs 237 and 247 and each two fixed legs 238 and 247 which are arranged in reverse of those in the fourth embodiment. The pivotal legs 237 and 247 are U-shaped members, and connected at the uppermost ends thereof to brackets 237A and 247A provided at the front portions of the lower surfaces 235B and 245B of the seat cushions 235 and 245 in such a way that they may rotate to be laid on the lower surface 235B and 245B. Each of the fixed legs 238 of the first rear seat 234 is composed of an upper leg 239 fixed on the rear portion of the lower surface 235B of the seat cushion 235 and a lower leg 240 which is connected through a pivot 241 to the lowermost end of the upper leg 239. The two lower legs 240 are fixed at the lowermost ends thereof to each lift arm 243 which will be mentioned later. The two upper legs 239 can pivot backwardly to be folded along with the seat cushion 235 around the pivots 241. Each of the fixed legs 248 of the second rear seat 244 is also composed of an upper leg 249 fixed on the rear portion of the lower surface 245B of the seat cushion 245 and a lower leg 250 connected through a pivot 251 to the lowermost end of the upper leg 249. Each lower leg 250 is also fixed on the floor 231 at the lowermost end thereof. The two upper legs 249 can pivot backwardly to be folded along with the seat cushion 245 around the pivots 251. There are provided a pair of lift arms 243 extending between the first seat 234 and the second seat 244. Each of the lift arms 243 is connected at the rearmost end thereof to the lowermost end of the lower leg 250 of the second seat 244 through a pivot 252 and fixed at the front end thereof to the lowermost end of the lower leg 240 of the first seat 234, being upwardly pivotable to be raised along with the folded first seat 234 around the pivot 252. When the first and the second seats 234 and 244 are in the regular seat position, the pivotal legs 237 and 247 are catched by releasable means 253A and 253B provided on the floor 231, and are released in folding the seats.

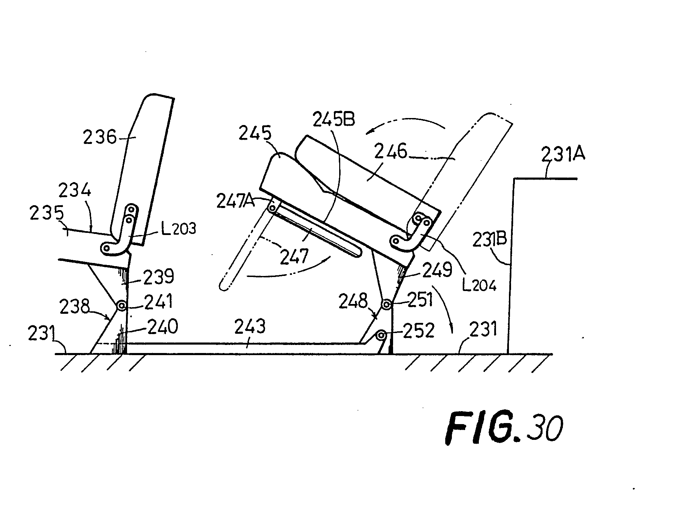

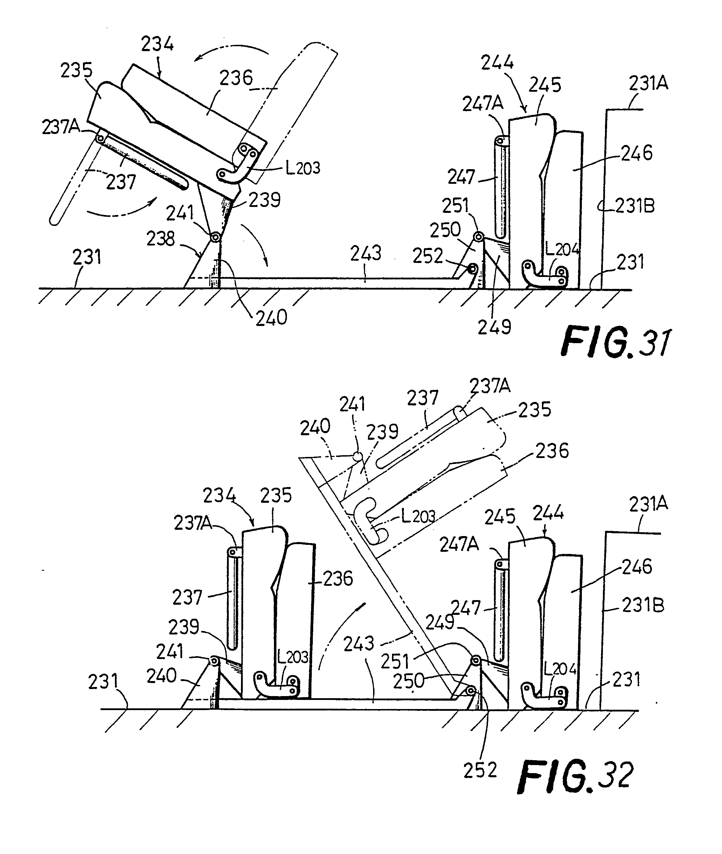

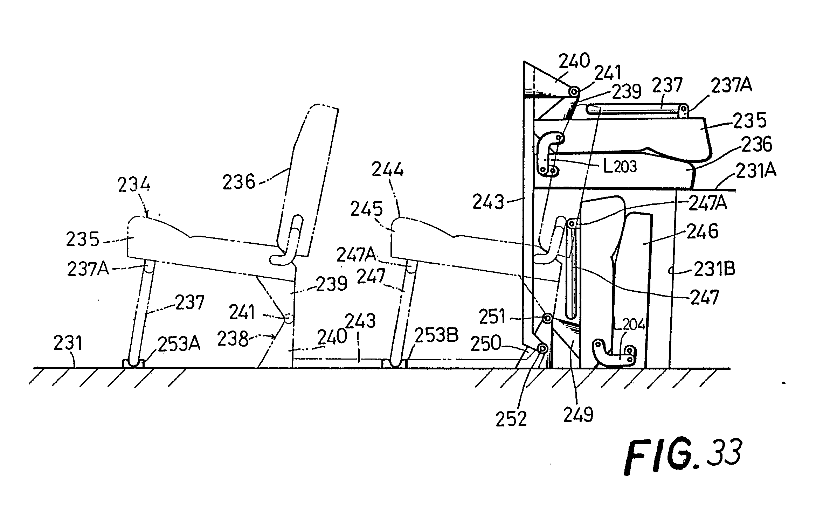

In folding the first and the second seats 234 and 244, the back cushion 246 of the second seat 244 is laid on the seat cushion 245, and the seat cushion 245 is raised at the forward portion thereof to pivot the pivotal leg 247 until it is laid on the lower surface 245B of the seat cushion 245, as is shown in Figure 30. Then, the folded seat cushion 245 is pivoted backwardly around the two pivots 251 of the fixed legs 248 until it is laid away vertically adjacent to the stepped portion 231B of the floor 231, as is shown in Figure 31. Then, the back cushion 236 of the first seat 234 is reclined forwardly until it is laid on the seat cushion 235, and the seat cushion 235 is raised at the forward portion thereof to pivot the pivotal leg 237 to be folded on the lower surface 235B of the seat cushion 235, as is shown in Figure 31. The seat cushion 235 is pivoted backwardly around the two pivots 241 of the fixed legs 238 until it stands straight on the parallel lift arms 243, as is shown in Figure 32. Then, the lift arms 243 are raised at the front ends thereof to be pivoted upwardly around the pivots 252 provided at the rearmost ends of the lift arms 243 until they stand straight with the folded first seat 234 located above the folded second seat 244, as is shown in Figure 33. There is provided at the stepped portion 231B a hook not shown which will be engaged with a portion of the seat cushion 235 of the first seat 234 laid above the second seat to fix it at the position.

In the fifth embodiment, the first and the second rear seats 234 and 244 are laid away in the rear portion of the rear compartment, with the first folded seat 234 laid above the second folded seat 244, which will be convenient to a delivery van having no rear door but a side door through which goods are loaded. Thus, the first seat 234 is advantageously laid above the second folded seat 244 to supply satisfactory floor space for loading.

The pivotal portions of the lift arms 213 are provided at the lowermost ends of the lower front legs 210 of the first seat 204 in the fourth embodiment, or the pivotal portions of the lift arms 243 are provided at the lowermost ends of the lower rear legs 250 of the second seat 244 in the fifth embodiment, but the pivotal portions may be pivotally provided through brackets not shown on the floor near the respective lower legs.

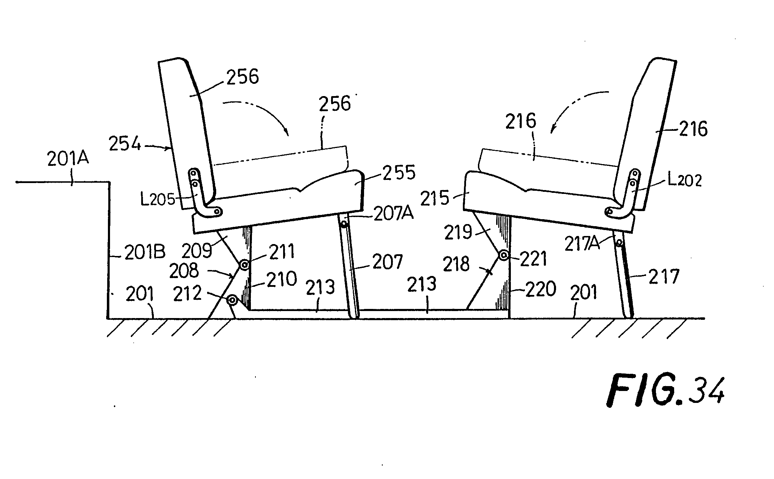

In the fourth and the fifth embodiments, the first seat 204 and 234 and the second seat 214 and 244 have their back cushions 206, 236, 216 and 246 at the back of the seat cushions 205, 235, 215 and 245, but the first seat may be faced to the second seat like a first seat 254 shown in Figure 34, which has a back cushion 256 attached to the forward end of a seat cushion 255 through a reclining device L205 so as to be pivoted backwardly until the back cushion 256 is laid on the seat cushion 255.

While the invention has been described with reference to several preferred embodiments thereof, it is to be understood that modifications or variations may be easily made without departing from the scope of the present invention which is defined by the appended claims.

**Claims**

1. A seat leg structure for a delivery van adapted for supporting a first seat (10, 48) and a second seat (13, 51) which are arranged on the floor (2, 42) in front and the rear at such predetermined intervals that passengers can sit thereon, each of said first and second seats having a back cushion (12, 15; 50, 53) and a corresponding seat cushion (11, 14; 49, 52) comprising a pair of leg assemblies for supporting each of said seat cushions, each of said leg assemblies having a pair of front legs (18, 26; 55, 63) and a pair of rear legs (20, 29; 59, 65), a pair of connecting legs (21, 62) provided for connecting said rear legs (20, 59) of said first seat (10, 48) at the lowermost ends thereof to the lowermost ends of said front legs (26, 63) of said second seat (13), either the front legs (18) of said first seat (10) or said rear legs (65) of said second seat (51) being pivotally mounted on the floor (2, 42) by a floor pivot (17, 68), the others of said legs (29, 55) not mounted on the floor, being foldable towards the lower surface of the corresponding seat cushion (14, 49); and pivotal means (25, 60) through which the other legs (29, 55) of the seat having the legs to be folded are connected to said connecting legs (21; 62) so as to fold the seat (13; 48) towards the other seat (10, 51), characterised in that the back cushions (12, 15; 50, 53) of each of the first and second seats are arranged to be folded over and laid on the corresponding seat cushions (11, 14; 49, 52) and in that the whole structure is pivotable about the floor pivot (17, 68) whereby, on folding of the back cushions (12, 15; 50, 53) and pivoting of the structure about the floor pivot (17, 68) and at said pivotal means (25, 60) the structure can take the position that the cushions of one seat (10, 51) are substantially vertical and the cushions of the other seat (13, 48) are substantially horizontal and above those of the one seat, and the connecting legs (21, 62) are substantially vertical.

2. A seat leg structure for a delivery van adapted for supporting a first seat (90) and a second seat (93) which are arranged on the floor (83) in front and the rear at such predetermined intervals that passenger can sit thereon, each of said first and second seats (90, 93) having a back cushion (92, 95) and a corresponding seat cushion (91, 94), comprising a pair of leg assemblies for supporting each of said seat cushions, each of said leg assemblies having a pair of front legs (97, 111) and a pair of rear legs (103, 114); a pair of connecting legs (106) provided for connecting said rear legs (103) of said first seat at the lowermost ends thereof to the lowermost ends of said front legs (111) of said second seat;

pairs of floor hinges (98, 115) through which said front legs (97) of the first seat and said rear legs (114) of the second seat are respectively pivotally and releasably mounted on the floor; and pivotal means (104, 110) through which the other legs (103, 111) of the seats are connected to the connecting legs (106) so as to fold one seat towards the other, characterised in that the back cushions (92, 95) of each of the first and second seats are arranged to be folded over and laid on the corresponding seat cushions (91, 94) and in that the whole structure is pivotable about either pair of floor hinges (98, 115) upon release of the other whereby, on folding of the back cushions (92, 95), release of one pair of floor hinges (98, 115), and pivoting of the structure both about the other pair of floor hinges (115, 98) and at the one of said pivotal means (104, 110) nearer that pair of floor hinges (98, 115) which is released, the structure can take the position that the cushions of one seat (90, 93) are substantially vertical and the cushions of the other seat are substantially horizontal and above those of the one seat, and the connecting legs (106) are substantially vertical.

3. A seat leg structure according to claim 2, characterised in that the front legs (97) of the first seat (90) and the rear legs (114) of the second seat (93) are foldable, by hinges (101, 113), towards the lower surface of the corresponding seat cushion (91, 94).

4. A seat leg structure according to claim 1, characterised in that said seat leg assembly further comprises a frame member connected to the lowermost ends of those of said front legs (55) or said rear legs (29) which are to be laid on the lower surface of the seat (48, 13), and releasable means (30, 56) provided on said frame member to be releasably mounted on the floor (2, 42).

5. A seat leg structure as claimed in any preceding claim characterised by a frame member (23, 66, 108) interconnecting the two connecting legs (21, 62, 106) and releasable means (24, 67, 109) provided on said frame member to be releasably mounted on the floor.

6. A seat leg structure as claimed in any preceding claim, characterised in that each seat leg assembly for supporting each seat cushion of said first seat and said second seat further comprises a support member for securing said seat cushion thereon.

7. A seat leg structure as claimed in any preceding claim, characterised in that each seat leg assembly for supporting each seat cushion of said first seat and said second seat is of a frame member formed bisymmetrically and disposed in parallel relation to the front to rear direction of the floor.

8. A seat leg structure for a delivery van adapted for supporting a first seat (204; 234) and a second seat (214; 244) which are arranged on the floor in front and the rear at such predetermined intervals that passengers can sit thereon, each of said first (204, 234) and second (214, 244) seats having a back cushion (206, 216; 236, 246) and a corresponding seat cushion (205, 215; 235; 245), comprising a pivotal leg (207, 217, 237, 247) provided at one end of each of the seat cushions (205, 215; 235, 245) and pivotable to be laid on the lower surface of the seat cushion, a pair of fixed legs (208, 218, 238, 248) which are provided at the other end of each of the seats, the fixed legs (208, 218; 238, 248) being arranged to allow pivoting of the seats relative to the floor and a pair of arms (213, 243) extending between the first and the second seats characterised in that the back cushions (206, 216; 236; 246) of each of the first and second seats are arranged to be folded over and laid on the corresponding seat cushions (205, 215; 235, 245), in that the arms (213, 243) are lift arms pivotally connected at first ends thereof to the lowermost ends of the fixed legs (208, 248) of said one seat, or to the floor adjacent thereto, and being connected to the fixed legs (218, 238) of the other seat whereby on folding of the back cushions (206, 216; 236, 246), pivoting of the said one seat (204, 244), pivoting of the other seat (214, 234) and pivoting of the lift arms (213, 243) the structure can take the position that the cushions of one seat (204, 244) are substantially vertical, and the cushions of the other seat (213, 243) are substantially horizontal and above those of the one seat, with the lift arms (213, 243) substantially vertical.

9. A seat leg structure as claimed in claim 8 characterised in that each of said fixed legs (208, 218; 238, 248) is composed of an upper leg (209, 219; 239, 249) fixed to the seat cushion and a lower leg (210, 220; 240, 250) pivotally connected to the lowermost end of said upper leg.

10. A seat leg structure as claimed in claim 8 or 9 characterised in that said lift arms (213, 243) are a pair of frame members extending in parallel, fixedly connected at first ends thereof to the lowermost ends of the fixed legs (218, 238) of one seat and pivotally connected at second ends thereof to the lowermost ends of the fixed legs (208, 248) of the other seat.

11. A seat leg structure as claimed in claim 8, 9 or 10 characterised in that the back cushion (256) of said first seat is attached to the front end of the seat cushion (255), and the back cushion (216) of the second seat is attached to the rearmost end of the seat cushion (215).

12. A seat leg structure as claimed in any one of claims 8 to 11 characterised in that releasable means (223A, 223B; 253A, 253B) are provided on the floor or at the lowermost end of each pivotal leg (207, 217, 237, 247) of the first seat and the second seat and adapted to keep the pivotal leg standing at the predetermined position.

13. A seat leg structure as claimed in any preceding claim, wherein said floor is a floor of a cargo compartment provided at the back of a driver seat of a front engined delivery van and separated from said driver seat by a separator, said first seat and said second seat being located to be forwardly adjacent to said separator.

14. A seat leg structure as claimed in any one of claims 1 to 12, wherein said floor is a floor of a cargo compartment provided at the back of a driver seat of a rear engined delivery van and has in the rear portion thereof a raised portion enclosing the engine, said first seat and said second seat being located to be rearwardly adjacent to said raised portion.

15. A seat leg structure as claimed in any one of claims 1 to 13, wherein said floor is a floor of a cargo compartment which is provided behind a driver seat, separated from said driver seat by a separator, and has doors in the forward position and at the back thereof.

## Revendications

1. Structure de pied de siège pour fourgonnette, adaptée au support d'un premier siège (48) et d'un second siège (13, 51) qui sont montés sur le plancher (2, 42) à l'avant et à l'arrière à des intervalles prédéterminés tels que des passagers puissent s'asseoir sur eux, chacun desdits premier et second sièges comprenant un coussin de dossier (12, 15; 53) et un coussin de siège correspondant (11, 14; 49, 52), comprenant une paire d'ensembles de pied pour supporter chacun desdits coussins de siège, chacun desdits ensembles de pied comprenant une paire de pieds avant (18, 26; 55, 63) une paire de pieds arrière (20, 29; 59, 65), une paire de pieds de liaison (21, 62) prévus pour relier lesdits pied arrière (20, 59) dudit premier siège (10, 48) à leurs extrémités les plus basses aux extrémités les plus basses desdits pieds avant (26, 53) dudit second siège (13), lesdits pieds avant (18) dudit premier siège (10) ou lesdits pieds arrière (65) dudit second siège (51) étant montées à pivotement sur le plancher (2, 42) par un pivot de plancher (17, 68), les autres desdits pieds (29, 55) qui ne sont pas montés sur le plancher pouvant être repliés en direction de la surface inférieure du coussin de siège correspondant (14, 49); et des moyens de pivotement (25, 60) au moyen desquels les autres pieds (29, 55) du siège dont les pieds peuvent être repliés sont reliés auxdits pieds de liaison (21; 62) de manière à replier le siège (13; 48) en direction de l'autre siège (10, 51),

caractérisé en ce que les coussins de dossier (12, 15; 50, 53) de chacun des premier et second sièges sont aménagés de manière à se replier et à se disposer sur les coussins de siège correspondants (11, 14; 49, 52) et en ce que l'ensemble de la structure peut pivoter autour du pivot de plancher (17, 68), de sorte que, lors du repli des coussins de dossier (12, 15; 50, 53) et du pivotement de la structure autour du pivot de plancher (17, 68) et desdits moyens de pivotement (25, 60), la structure peut occuper la position dans laquelle les coussins d'un siège (10, 51) sont sensiblement verticaux et les coussins de l'autre siège (13, 48) sont sensiblement horizontaux et au-dessus de ceux du premier siège, et que les pieds de liaison (21; 62) sont sensiblement verticaux.

2. Structure de pied de siège pour fourgonnette, adaptée pour supporter un premier siège (90) et un second siège (93) qui sont montés sur le plancher (83) à l'avant et à l'arrière selon des intervalles prédéterminés tels que des passagers puissent s'asseoir sur eux, chacun desdits premier et second sièges (80, 93) comprenant un coussin de dossier (92, 95) et un coussin de siège correspondant (91, 94) comprenant une paire d'ensemble de pieds pour supporter chacun desdits coussins de siège, chacun desdits ensembles de pieds comprenant une paire de pieds avant (97, 111) et une paire de pieds arrière (103, 114), une paire de pieds de liaison (106) prévus pour relier lesdits pieds arrière (103) dudit premier siège à leurs extrémités les plus basses aux extrémités les plus basses desdits pieds (11, 111) dudit second siège; des paires de charnières de plancher (98, 115) par lesquelles lesdits pieds avant (97) du premier siège et lesdits pieds arrière (114) du second siège sont respectivement montés de façon pivotante et amovible sur le plancher; et des moyens de pivotement (104, 110) au moyen desquels les autres pieds (103, 111) du siège sont reliées aux pieds de liaison (106) de manière à replier un siège en direction de l'autre.

caractérisée en ce que les coussins de dossier (92, 95) de chacun desdits premier et second sièges sont agencés de manière à être repliés au-dessus et disposés sur les coussins de siège correspondants (91, 94) et en ce que l'ensemble de la structure peut pivoter autour de l'une ou l'autre paire de charnières de plancher (98, 115) lorsque l'autre est dégagée, de sorte que, lorsqu'on replie les coussins de dossier (92, 95), lorsqu'on dégage une paire de charnières de plancher (98, 115), et lorsqu'on fait pivoter la structure à la fois autour de l'autre paire de charnières de plancher (115, 98) et de l'un desdits moyens de pivotement (104, 110) qui est le plus proche de la paire de charnières de plancher (98, 115) qui est dégagée, la structure peut occuper la position dans laquelle les coussins d'un siège (90, 93) sont sensiblement verticaux et les coussins de l'autre siège sont sensiblement horizontaux et disposés au-dessus de ceux du premier siège, et lesdits pieds de liaison (106) sont sensiblement verticaux.

3. Structure de pied de siège selon la revendication 2, caractérisée en ce que les pieds avant (97) du premier siège (90) et les pieds arrière (114) du second siège (93) sont pliables au moyen de charnières (101, 113) en direction de la surface inférieure du coussins de siège correspondant (91, 94).

4. Structure de pied de siège selon la revendication 1, caractérisée en ce que ledit ensemble de pied de siège comprend en outre un élément de cadre relié aux extrémités les plus basses de ceux desdits pieds avant (55) ou desdits pieds arrière (29) qui doivent se disposer sur la surface inférieure du siège (48, 13), et des moyens dégageables (56) prévus sur ledit élément de cadre pour être montés de façon amovible sur le plancher (2, 42).

5. Structure de pied de siège selon l'une quelconque des revendications précédentes, caractérisée par un élément de cadre (23, 66, 108) interconnectant les deux pieds de liaison (21, 62, 206) et par des moyens dégageables (24, 67, 109) prévus sur ledit élément de cadre de manière à être montés de façon amovible sur le plancher.

6. Structure de pied de siège l'une quelconque des revendications précédentes, caractérisée en ce que chaque ensemble de pied de siège destiné au support de chaque coussin de siège dudit premier siège et dudit second siège comprend en outre un élément de support pour fixer ledit coussin de siège sur lui.

7. Structure de pied de siège selon l'une quelconque des revendications précédentes, caractérisée en ce que chaque ensemble de pied de siège destiné au support de chaque coussin de siège dudit premier siège et dudit second siège est un élément de cadre de forme bi-symétrique et disposé parallèlement à la direction allant de l'avant vers l'arrière du plancher.

8. Structure de pied de siège pour fourgonnette apte à supporter un premier siège (204; 234) et un second siège (214; 244) qui sont disposés sur le plancher à l'avant et à l'arrière à des intervalles prédéterminés tels que des passagers peuvent s'asseoir sur eux, chacun desdits premier (204, 234) et second (214, 244) siège comprenant un coussin de dossier (206, 216; 236, 246) et un coussin de siège correspondant (205, 215; 235, 245), comprenant un pied pivotant (207, 217; 237, 247) prévu à une extrémité de chacun desdits coussins de siège (205, 215; 235, 245) et pouvant pivoter de façon à se disposer sur le surface inférieure du coussin de siège, une paire de pieds fixes (208, 218; 238, 248) qui sont prévues à l'autre extrémité de chacun des sièges, les pieds fixes (208, 218; 238, 248) étant aménagés pour permettre le pivotement des sièges par rapport au plancher et une paire de bras (213, 243) s'étendant entre les premier et second sièges,

caractérisée en ce que les coussins de dossier (206, 216; 236, 246) de chacun des premier et second sièges sont aménagés de manière à se replier et à se disposer sur les coussins de siège correspondants (205, 215; 235, 245), en ce que les bras (213, 243) sont des bras de soulèvement reliés de façon pivotante à leurs premières extrémités aux extrémités les plus basses des pieds fixes (208, 248) dudit premier siège, ou au plancher qui leur est adjacent, et étant reliés aux pieds fixes (218, 248) de l'autre siège, de sorte que, lors du pliage des coussins de dossier (206, 216; 236, 246), lors du pivotement dudit premier siège (204, 244), lors du pivotement de l'autre siège (214, 234) et lors du pivotement des bras de soulèvement (213, 243), la structure peut occuper la position selon laquelle les coussins d'un siège (204, 244) sont sensiblement verticaux, et les coussins de l'autre siège (213, 243) sont sensiblement horizontaux et au-dessus de ceux du premier siège, les bras de soulèvement (213, 233) étant sensiblement verticaux.

9. Structure de pied de siège selon la revendication 8, caractérisée en ce que chacun desdits pieds fixes (208, 218; 238, 248) est composé d'un pied supérieur (209, 219; 239, 249) fixé au coussin de siège et d'un pied inférieur (210, 220; 240, 250) relié de façon pivotante à l'extrémité la plus basse dudit pied supérieur.

10. Structure de pied de siège selon la revendication 8 ou 9, caractérisée en ce que lesdits bras de soulèvement (213, 243) sont une paire d'éléments de cadre s'ètendant en parallèle, reliés de façon fixe à leurs premières extrémités aux extrémités les plus basses des pieds fixes (218, 238) d'un siège et reliées de façon pivotante à leurs secondes extrémités aux extrémités les plus basses des pieds fixes (208, 248) de l'autre siège.

11. Structure de pied de siège selon l'une quelconque des revendications 8, 9 ou 10, caractérisée en ce que le coussin de dossier (256) dudit premier siège est fixé à l'extrémité avant dudit coussin de siège (255), et le coussin de dossier (216) du second siège est fixé à l'extrémité la plus à l'arrière du coussin de siège (215).

12. Structure de pied de siège selon l'une quelconque des revendications 8 à 11, caractérisée en ce que des moyens dégageables (223A, 223B; 253A, 253B) sont prévus sur le plancher ou à l'extrémité la plus basse de chaque pied pivotant (207, 217, 237, 247) du premier siège et du second siège et aptes à maintenir le pied pivotant disposés dans la position prédéterminée.

13. Structure de pied de siège selon l'une quelconque des revendications précédentes, caractérisée en ce que ledit plancher est le plancher d'un compartiment à marchandises prévu à l'arrière du siège du conducteur d'une fourgonnette, à moteur à l'avant, et séparé dudit siège du conducteur par un séparateur, ledit premier siège et ledit second siège étant disposés de manière à être adjacents à l'avant dudit séparateur.

14. Structure de pied de siège selon l'une quelconque des revendications 1 à 12, caractérisée en ce que ledit plancher est un plancher d'un compartiment à marchandises prévu à l'arrière du siège du conducteur d'une fourgonnette à moteur à l'arrière et comprend dans sa partie arrière une partie surélevée entourant le moteur, ledit premier siège et ledit second siège étant disposés de façon à être adjacents par l'arrière de ladite partie surélevée.

15. Structure de pied de siège selon l'une quelconque des revendications 1 à 13, caractérisée en ce que ledit plancher est un plancher d'un compartiment à marchandises prévu à l'arrière du siège du conducteur, séparé dudit siège du conducteur par un séparateur, et comprend des portes dans la position avant et à l'arrière de celui-ci.

**Patentansprüche**

1. Sitzbeinaufbau für einen Lieferwagen zum Lagern eines ersten Sitzes (10, 48) und eines zweiten Sitzes (13, 51), die auf dem Boden (2, 42) vorne und hinten so in vorbestimmten Abständen angeordnet sind, daß Passagiere darauf sitzen können, wobei der erste und der zweite Sitz jeweils ein Rückenpolster (12, 15; 50, 53) und ein entsprechendes Sitzpolster (11, 14; 49, 53) aufweisen, mit einem Paar Beineinrichtungen zum Lagern der Sitzpolster, wobei jede Beineinrichtung ein Paar vordere Beine (18, 26; 55, 63) und ein Paar hintere Beine (20, 29; 59, 65), ein Paar Verbindungsstege (21, 62), die zur Verbindung der hinteren Beine (20, 59) des ersten Sitzes (10, 48) am unteren Ende derselben mit dem unteren Ende der vorderen Beine (26, 63) des zweiten Sitzes (13) vorgesehen sind, entweder die vorderen Beine (18) des ersten Sitzes (10) oder die hinteren Beine (65) des zweiten Sitzes (51) drehbar an dem Boden (2, 42) über einen Bodendrehzapfen (17, 68) befestigt sind, die anderen Beine (29, 55), die nicht auf dem Boden befestigt sind, in Richtung der unteren Oberfläche des entsprechenden Sitzpolsters (14, 49) faltbar sind, und Dreheinrichtungen (25, 60), durch die die anderen Beine (29, 55) des Sitzes mit eingeklappten Beinen mit den Verbindungsstegen (21; 62) so verbunden sind, daß der Sitz (13; 48) gegen den anderen Sitz (10, 51) geklappt werden kann, dadurch gekennzeichnet, daß die Rückenpolster (12, 15; 50, 53) des ersten und zweiten Sitzes so angeordnet sind, daß diese nach vorne geklappt werden können und auf das entsprechende Sitzpolster (11, 14; 49, 52) gelegt sind und daß der gesamte Aufbau um den Bodendrehzapfen (17, 68) drehbar ist, wodurch nach Umklappen der Rückenpolster (12, 15; 50, 53) und Drehen des Aufbaus um den Bodendrehzapfen (17, 68) und die Dreheinrichtung (25, 60) der Aufbau eine solche Position einnehmen kann, daß die Polster des einen Sitzes (10, 51) im wesentlichen vertikal sind und die Polster des anderen Sitzes (13, 48) im wesentlichen horizontal und über denen des ersten Sitzes sind, und die Verbindungsstege (21; 62) im wesentlichen vertikal sind.

2. Sitzbeinaufbau für einen Lieferwagen zur Lagerung eines ersten Sitzes (90) und eines zweiten Sitzes (93), die auf dem Boden (83) vorne und hinten in vorbestimmten Abstand so angeordnet sind, daß Passagiere darauf sitzen können, wobei der erste und zweite Sitz (90, 93) jeweils ein Rückenpolster (92, 95) und ein entsprechendes Sitzpolster (91, 94) aufweisen, mit einem Paar Beineinrichtungen zum Lagern der Sitzpolster, wobei jede Beineinrichtung ein Paar vordere Beine (97, 111) und ein Paar hintere Beine (103, 114), ein Paar Verbindungsstege (106), die zur Verbindung der hinteren Beine (103) des ersten Sitzes am unteren Ende derselben mit den unteren Ende der vorderen Beine (111) des zweiten Sitzes vorgesehen sind, ein Paar Bodenscharniere (98, 115), durch die die vorderen Beine (97) des ersten Sitzes und die hinteren Beine (114) des zweiten Sitzes jeweils drehbar und lösbar auf dem Boden befestigt sind und Dreheinrichtungen (104, 110), durch die die anderen Beine (103, 111) der Sitze mit den Verbindungsstegen (106) so verbunden sind, daß der eine Sitz gegen den anderen geklappt werden kann, dadurch gekennzeichnet, daß die Rückenpolster (92, 95) des ersten und zweiten Sitzes so angeordnet sind, daß diese nach vorne geklappt werden können und auf den entsprechenden sitzpolstern (91, 94) liegen, und daß der gesamte Aufbau um ein Paar der Bodenscharniere (98, 115) nach Lösen des anderen drehbar ist, wodurch nach Umklappen der Rückenpolster (92, 95), Lösen des einen Paares der Bodenscharniere (98, 115) und Drehen des gesamten Aufbaus um das andere Paar der Bodenscharniere (115, 98) und um das eine Paar der Dreheinrichtungen (104, 110) nahe dem Paar der Bodenscharniere (98, 115), das gelöst ist, der Aufbau ein Position einnehmen kann, daß die Polster des einen Sitzes (90, 93) im wesentlichen vertikal sind und die Polster des anderen Sitzes im wesentlichen horizontal und über denen des ersten Sitzes sind, und die Verbindungsstege (106) im wesentlichen vertikal sind.

3. Sitzbeinaufbau nach Anspruch 2, dadurch gekennzeichnet, daß die vorderen Beine (97) des ersten Sitzes (90) und die hinteren Beine (114) des zweiten Sitzes (93) um Scharniere (101, 113) gegen die untere Oberfläche des jeweiligen Sitzpolsters (91, 94) klappbar sind.

4. Sitzbeinaufbau nach Anspruch 1, dadurch gekennzeichnet, daß die Sitzbeineinrichtung weiterhin ein Rahmenteil, das mit dem unteren Ende der vorderen Beine (55) oder der hinteren Beine (29), die an die untere Oberfläche des Sitzes (48, 13) angelegt sind, verbunden ist und eine Löseeinrichtung (30, 56), die an dem Rahmenteil vorgesehen ist, um lösbar an dem Boden (2, 42) befestigt zu sein, aufweist.

5. Sitzbeinaufbau nach einem der Ansprüche 1 bis 4, gekennzeichnet, durch ein Rahmenteil (23, 66, 108), das die zwei Verbindungsstege (21, 62, 106) und die lösbare Einrichtung (24, 67, 109), die an dem Rahmenteil vorgesehen ist, um lösbar auf dem Boden befestigt zu sein, miteinander verbindet.

6. Sitzbeinaufbau nach einem der Ansprüche 1 bis 5, dadurch gekennzeichnet, daß jede Sitzbeineinrichtung zum Lagern jeweils des Sitzpolsters des ersten Sitzes und des Zweiten Sitzes weiterhin ein Lagerteil zum Sichern des Sitzpolsters darauf aufweist.

7. Sitzbeinaufbau nach einem der Ansprüche 1 bis 6, dadurch gekennzeichnet, daß jede Sitzbeineinrichtung zum Lagern des jeweiligen Sitzpolsters des ersten Sitzes und des zweiten Sitzes aus einem doppelsymmetrischen Rahmenteil gebildet ist und parallel zu der vorderen und hinteren Richtung des Bodens angeordnet ist.

8. Sitzbeinaufbau für einen Lieferwagen zum Lagern eines ersten Sitzes (204; 234) und eines zweiten Sitzes (214, 244), die auf dem Boden vorne und hinten mit einem vorbestimmten Abstand so angeordnet sind, daß Passagiere darauf sitzen können, wobei der erste (204, 234) und zweite (214, 244) Sitz ein Rückenpolster (206, 216; 236, 246) und ein entsprechendes Sitzpolster (205, 215; 235, 245) aufweisen, mit einem drehbaren Bein (207, 217; 237, 247), das an dem einen Ende jedes Sitzpolsters (205, 215; 235, 245) vorgesehen ist und drehbar ist, um auf die untere Oberfläche des Sitzpolsters gelegt zu werden, einem Paar fester Beine (208, 218; 238, 248), die an dem anderen Ende jedes Sitzes vorgesehen sind, wobei die festen Beine (208, 218; 238, 248) so angeordnet sind, daß diese eine Drehung der Sitze in bezug auf den Boden zulassen und einem Paar Arme (213, 243), die sich zwischen dem ersten und zweiten Sitz erstrecken, dadurch gekennzeichnet, daß die Rückenpolster (206, 216; 236, 246) des ersten und zweiten Sitzes so angeordnet sind, daß diese nach vorne geklappt werden können und auf den entsprechenden Sitzpolstern (205, 215; 235, 245) liegen, daß die Arme (213, 243) Hubhebel sind, die an den ersten Enden drehbar mit den unteren Enden der festen Beine (208, 248) des einen Sitzes oder mit dem benachbarten Boden verbunden sind und die mit den festen Beinen (218, 238) des anderen Sitzes verbunden sind, wodurch nach Umklappen der Rückenpolster (206, 216; 236, 246) Drehen des einen Sitzes (204, 244), Drehen des anderen Sitzes (214, 234) und Drehen der Hubhebel (213, 243) der Aufbau eine solche Position einnehmen kann, daß die Polster des einen Sitzes (204, 244) im wesentlichen vertikal sind und die Polster des anderen Sitzes (213, 243) im wesentlichen horizontal und über denen des ersten Sitzes sind und die Hubhebel (213, 243) im wesentlichen vertikal sind.

9. Sitzbeinaufbau nach Anspruch 8, dadurch gekennzeichnet, daß jedes der festen Beine (208, 218; 238, 248) aus einem oberen Bein (209, 219; 239, 249), das an dem Sitzpolster befestigt ist und einem unteren Bein (210, 220; 240, 250), das drehbar an dem unteren Ende des oberen Beins befestigt ist, aufgebaut ist.

10. Sitzbeinaufbau nach einem der Ansprüche 8 oder 9, dadurch gekennzeichnet, daß die Hubhebel (213, 243) ein Paar Rahmenteile, die sich parallel erstrecken, sind, und an deren ersten Enden fest mit den unteren Enden der festen Beine (218, 238) des einen Sitzes verbunden sind und drehbar an den anderen Enden mit den unteren Enden der festen Beine (208, 248) des anderen Sitzes verbunden sind.

11. Sitzbeinaufbau nach einem der Ansprüche 8, 9 oder 10, dadurch gekennzeichnet, daß das Rückenpolster (256) des ersten Sitzes an dem vorderen Ende des Sitzpolsters (255) angebracht ist und das Rückenpolster (216) des zweiten Sitzes an dem hinteren Ende des Sitzpolsters (215) angebracht ist.

12. Sitzbeinaufbau nach einem der Ansprüche 8 bis 11, dadurch gekennzeichnet, daß eine lösbare Einrichtung (223A, 223B; 253A, 253B) auf dem Boden oder an dem unteren Ende eines jeden drehbaren Beines (207, 217, 237, 247) des ersten Sitzes und des zweiten Sitzes vorgesehen sind und so angepaßt sind, daß das drehbare Bein in einer vorbestimmten Position steht.

13. Sitzbeinaufbau nach einem der Ansprüche 1 bis 12, dadurch gekennzeichnet, daß der Boden ein Boden eines Ladeabteils ist, der hinter dem Fahrersitz eines frontangetriebenen Lieferwagens vorgesehen ist, und von dem Fahrersitz durch eine Abtrennung abgetrennt ist, wobei der erste Sitz und der zweite Sitz so angeordnet sind, daß diese nach vorne benachbart der Abtrennung sind.

14. Sitzbeinaufbau nach einem der Ansprüche 1 bis 12, dadurch gekennzeichnet, daß der Boden ein Boden eines Ladeabteils ist, der hinter dem Fahrersitz eines hinterradangetriebenen Lieferwagens vorgesehen ist, und der im hinteren Teil einen angehobenen Teil aufweist, der die Maschine einschließt, wobei der erste Sitz und der zweite Sitzt nach hinten benachbart dem angehobenen Teil angeordnet sind.

15. Sitzbeinaufbau nach einem der Ansprüche 1 bis 13, dadurch gekennzeichnet, daß der Boden ein Boden eines Ladeabteils ist, der hinter einem Fahrersitz vorgesehen ist, der von dem Fahrersitz durch eine Abtrennung abgetrennt ist und in der vorderen Position und der hinteren Position Türen aufweist.

**FIG.1**

**FIG. 2**

FIG.3

2

FIG. 4

FIG. 5

FIG.6

FIG.7

FIG.8

4

**FIG.9**

**FIG.10**

**FIG.11**

5

**FIG.12**

**FIG.13**

6

FIG.14

FIG.15

**FIG.** 16

FIG.17

0 067 648

FIG.18

FIG.19

FIG. 20

FIG. 21

FIG.22

FIG.23

0 067 648

**FIG.** 24

FIG. 25

0 067 648

**FIG. 26**

0 067 648

FIG. 27

0 067 648

0 067 648

FIG.28

FIG. 29

FIG.30

**FIG.31**

**FIG.32**

FIG.33

230

FIG.34

201A
254
256
256
255
L205
207A
201B 209 211
208 210 213 207
201 212
213
218 215
219
216 216
L202
217A
221
220 201
217

0 067 648